# EUROPEAN PATENT APPLICATION

(11) **EP 4 224 452 A1**
(43) Date of publication of application: **09.08.2023**
(21) Application number: 21875134.5
(22) Date of filing: 09.09.2021
(51) Int. Cl.: G08G 1/00, G08G 1/16

(54) **INFORMATION PROCESSING SYSTEM, AND INFORMATION PROCESSING METHOD**

(30) Priority: 29.09.2020 US 202063084781 P
(71) Applicant: Sony Semiconductor Solutions Corporation, Atsugi-shi, Kanagawa 243-0014 (JP)
(72) Inventor: FUJINAMI, Yasushi, Atsugi-shi, Kanagawa 243-0014 (JP); ISSHIKI, Akitoshi, Atsugi-shi, Kanagawa 243-0014 (JP)
(74) Representative: MFG Patentanwälte Meyer-Wildhagen Meggle-Freund Gerhard PartG mbB
(86) International application number: PCT/JP2021/033221
(87) International publication number: WO 2022/070832

(57) **Abstract**

To improve current and future safety of a site. An information processing system for ensuring safety of a site where a heavy machine is introduced, the information processing system includes one or more sensor units that are mounted on an apparatus arranged at the site to detect a situation at the site, a recognition unit that recognizes the situation at the site based on sensor data acquired by the one or more sensor units, and an apparatus management unit that manages the apparatus based on a result of recognition by the recognition unit.

## Description

### Field

The present disclosure relates to an information processing system and an information processing method.

### Background

With recent development of autonomous drive technology and drive assistance technology, a technology to sense surrounding danger for development of driving safety.

### Citation List

### Patent Literature

Patent Literature 1: JP 2020-092447 A

### Summary

### Technical Problem

However, in the conventional autonomous drive/drive assistance technology, autonomous avoidance and a warning to a driver are performed recognizing surrounding people, automobiles, and the like. However, in a specific scene, such as such as a construction site or building site, where a heavy machine and the like are handled, an accident may occur due to a much larger number of factors than those assumed for a general road and the like. Therefore, it is impossible to accurately identify a risk leading to an accident or the like being in the surroundings, a situation of an accident or the like that has occurred, a cause of the accident or the like, only by recognizing surrounding people, automobiles, and the like, and merely recognizing the surrounding people, automobiles, and the like are insufficient to ensure current or future safety of the site.

Therefore, the present disclosure proposes an information processing system and an information processing method that are configured to improve current or future safety of the site.

### Solution to Problem

To solve the problems described above, an information processing system, according to an embodiment of the present disclosure, for ensuring safety of a site where a heavy machine is introduced includes: one or more sensor units that are mounted on an apparatus arranged at the site to detect a situation at the site; a recognition unit that recognizes the situation at the site based on sensor data acquired by the one or more sensor units; and an apparatus management unit that manages the apparatus based on a result of recognition by the recognition unit.

### Brief Description of Drawings

FIG. 1 is a diagram illustrating an exemplary system configuration of an information processing system according to an embodiment of the present disclosure.
FIG. 2 is a diagram illustrating a process from recognition of an earthquake to warning to an operator in an information processing system 1 according to a first embodiment.
FIG. 3 is a flowchart illustrating an exemplary operation procedure in the information processing system 1 according to the first embodiment.
FIG. 4 is a diagram illustrating a process from recognition of an accident to warning to the operator in the information processing system 1 according to a second embodiment.
FIG. 5 is a flowchart illustrating an exemplary operation procedure in the information processing system 1 according to the second embodiment.
FIG. 6 is a diagram illustrating a process from recognition of a potential incident state to warning to the operator in the information processing system 1 according to a third embodiment.
FIG. 7 is a flowchart illustrating an exemplary operation procedure in the information processing system 1 according to the third embodiment.
FIG. 8 is a diagram illustrating a process from recognition of a dangerous state to warning to the operator in the information processing system 1 according to a fourth embodiment.
FIG. 9 is a flowchart illustrating an exemplary operation procedure in the information processing system 1 according to the fourth embodiment.
FIG. 10 is a diagram illustrating a process from movement recognition to notification (may also include warning) to the operator in the information processing system 1 according to a fifth embodiment.
FIG. 11 is a flowchart illustrating an exemplary operation procedure in the information processing system 1 according to the fifth embodiment.
FIG. 12 is a diagram illustrating a process from recognition of an operator's fatigue to warning to the operator in the information processing system 1 according to a sixth embodiment.
FIG. 13 is a flowchart illustrating an exemplary operation procedure in the information processing system 1 according to the sixth embodiment.
FIG. 14 is a diagram illustrating a process from recognition processing to warning to the operator in the information processing system 1 according to a seventh embodiment.
FIG. 15 is a flowchart illustrating an exemplary operation procedure in the information processing system 1 according to the seventh embodiment.
FIG. 16 is a diagram illustrating a process from recognition processing to warning to the operator in the information processing system 1 according to an eighth embodiment.
FIG. 17 is a flowchart illustrating an exemplary operation procedure in the information processing system 1 according to the eighth embodiment.
FIG. 18 is a diagram illustrating a process from recognition processing to warning to the operator in the information processing system 1 according to a ninth embodiment.
FIG. 19 is a flowchart illustrating an exemplary operation procedure in the information processing system 1 according to the ninth embodiment.
FIG. 20 is a diagram illustrating a process from recognition processing to warning to the operator in the information processing system 1 according to a tenth embodiment.
FIG. 21 is a flowchart illustrating an exemplary operation procedure in the information processing system 1 according to the tenth embodiment.
FIG. 22 is a diagram illustrating a process from recognition processing to warning to the operator in the information processing system 1 according to an eleventh embodiment.
FIG. 23 is a flowchart illustrating an exemplary operation procedure in the information processing system 1 according to the eleventh embodiment.
FIG. 24 is a hardware configuration diagram illustrating an example of a computer implementing the functions of the information processing device according to the present disclosure.

### Description of Embodiments

The embodiments of the present disclosure will be described in detail below with reference to the drawings. Note that in the following embodiments, the same portions are denoted by the same reference numerals, and a repetitive description thereof will be omitted.

Furthermore, the present disclosure will be described in the order of items shown below.
1. Exemplary system configuration
2. First Embodiment
2.1 Exemplary processing procedure
2.2 Exemplary operation procedure
2.3 Conclusion
3. Second Embodiment
3.1 Exemplary processing procedure
3.2 Exemplary operation procedure
3.3 Conclusion
4. Third Embodiment
4.1 Exemplary processing procedure
4.2 Exemplary operation procedure
4.3 Conclusion
5. Fourth Embodiment
5.1 Exemplary processing procedure
5.2 Exemplary operation procedure
5.3 Conclusion
6. Fifth Embodiment
6.1 Exemplary processing procedure
6.2 Exemplary operation procedure
6.3 Conclusion
7. Sixth Embodiment
7.1 Exemplary processing procedure
7.2 Exemplary operation procedure
7.3 Conclusion
8. Seventh Embodiment
8.1 Exemplary processing procedure
8.2 Exemplary operation procedure
8.3 Conclusion
9. Eighth Embodiment
9.1 Exemplary processing procedure
9.2 Exemplary operation procedure
9.3 Conclusion
10. Ninth Embodiment
10.1 Exemplary processing procedure
10.2 Exemplary operation procedure
10.3 Conclusion
11. Tenth Embodiment
11.1 Exemplary processing procedure
11.2 Exemplary operation procedure
11.3 Conclusion
12. Eleventh Embodiment
12.1 Exemplary processing procedure
12.2 Exemplary operation procedure
12.3 Conclusion
13. Hardware configuration

### 1. Exemplary system configuration

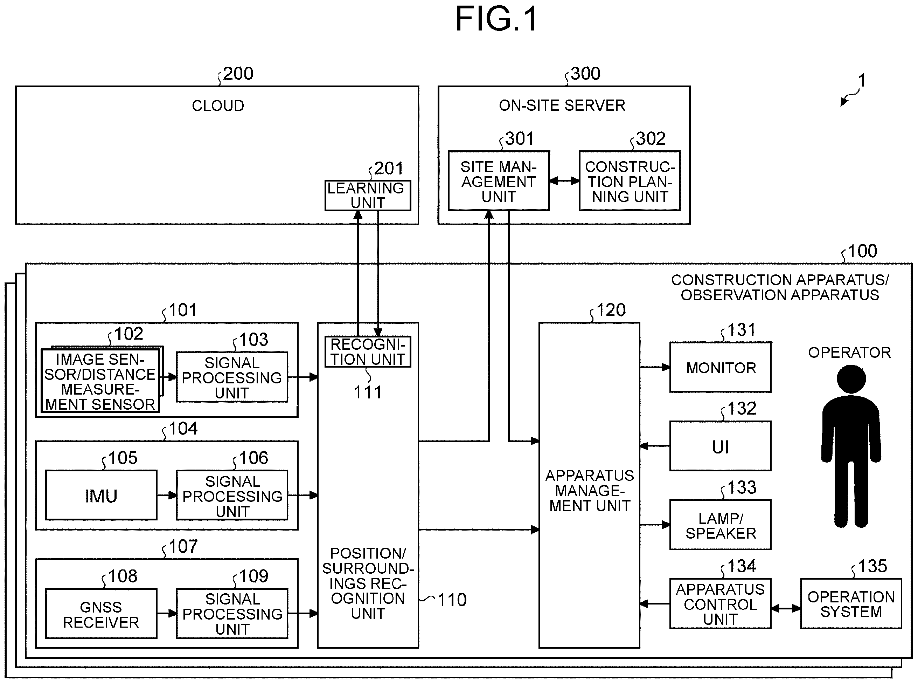

First, an exemplary system configuration common to the following embodiments will be described in detail with reference to the drawings. FIG. 1 is a diagram illustrating an exemplary system configuration of an information processing system according to an embodiment of the present disclosure.

As illustrated in FIG. 1, the information processing system 1 according to the following embodiments includes, for example, at least one apparatus 100, a cloud 200, and an on-site server 300. The apparatus 100, the cloud 200, and the on-site server 300 are communicably connected to each other via a predetermined network, such as a wired or wireless local area network (LAN) (including WiFi), wide area network (WAN), the Internet, a mobile communication system (including 4th generation mobile communication system (4G), 4G Long Term Evolution (LTE), 5G, or the like), Bluetooth (registered trademark), or infrared communication.

### (Apparatus 100)

The apparatus 100 is a construction apparatus, such as a heavy machine or a measurement apparatus, that is used at a work site such as a building site or construction site. Note that the apparatus 100 also includes a construction apparatus and the like on which the measurement apparatus is mounted. In addition, the present invention is not limited to the construction apparatus and measurement apparatus, and various objects each connectable to the predetermined network and including a sensor may be applied as the apparatus 100. Examples of the various objects include a mobile body, such as an automobile, railroad vehicle, aircraft (including a helicopter, or the like), or ship, that is directly or remotely operated by a driver, an autonomous robot such as a transport robot, cleaning robot, interactive robot, or pet robot, various drones (including a flying type drone, ground drone, an underwater drone, etc.), a construction such as a monitoring camera (including a fixed point camera or the like) or a traffic light, and a smartphone, a wearable device, or an information processing terminal that is carried by a person or pet.

Each of the apparatuses 100 includes a sensor unit 101, a position/surroundings recognition unit 110, an apparatus management unit 120, a monitor 131, a user interface 132, an output unit 133, an apparatus control unit 134, and an operation system 135.

### -Sensor unit 101

The sensor unit 101 includes one or more sensor units 101, 104, and 107, and the sensor units 101, 104, and 107 respectively include sensors such as various image sensors 102, various inertial sensors 105, and various position sensors 108, and further include signal processing units 103, 106, and 109. The various image sensors 102 include a color or monochrome image sensor, a distance measurement sensor, such as a time-of-flight (ToF) sensor, light detection and ranging (LiDAR), laser detection and ranging (LADAR), or millimeter wave radar, and an event-based vision sensor (EVS). The various inertial sensors 105 include an inertial measurement unit (IMU), a gyro sensor, and an acceleration/ angular velocity sensor. The various position sensors 108 include a global navigation satellite system (GNSS) and the like. The signal processing units 103, 106, and 109 each perform predetermined processing on a detection signal output from each sensor to generate sensor data.

Note that, in addition to the image sensor 102, inertial sensor 105, and position sensor 108 which are described above, various sensors such as a sound sensor, atmospheric pressure sensor, water pressure sensor, illuminance sensor, temperature sensor, humidity sensor, infrared sensor, and wind sensor may be used for the sensor.

### -Position/surroundings recognition unit 110

The position/surroundings recognition unit 110 recognizes a position of the apparatus 100 and a situation around the apparatus 100, on the basis of the sensor data input from one or more of the sensor units 101, 104, and 107 (hereinafter, for ease of description, one or more of the sensor units 101, 104, and 107 will be referred to as "sensor unit 101 or the like"). Note that the position of the apparatus 100 may be a global coordinate position acquired by GNSS or the like, or may be a coordinate position in a certain space estimated by simultaneous localization and mapping (SLAM) or the like.

Therefore, the position/surroundings recognition unit 110 includes a recognition unit 111 that uses the sensor data input from the sensor unit 101 or the like as an input and position information or information about surroundings of the apparatus 100 (hereinafter, referred to as situation information) as an output. However, the input to the recognition unit 111 may include sensor data acquired by the sensor unit 101 or the like of another apparatus 100, or may include data input from the cloud 200, the on-site server 300, or the like via the network, not limited to the sensor data acquired by the sensor unit 101 or the like of the apparatus 100.

The recognition unit 111 may be an inference unit including a learning model trained using machine learning, or may be a rule-based recognition unit that identifies an output from an input according to a predetermined algorithm.

Note that the learning model in the present embodiment may be, for example, a learning model using a neural network, such as a deep neural network (DNN), convolutional neural network (CNN), recurrent neural network (RNN), generative adversarial network (GAN), or an autoencoder.

Furthermore, the learning model may be a single-modal learning learner using one type of data as an input, or may be a multi-modal learning model using different types of data collectively as an input.

The recognition unit 111 may be configured by one learning model, or may be configured to include two or more learning models and output a final result of the recognition from inference results output from the learning models.

The recognition performed by the recognition unit 111 may be short-term recognition using the sensor data input from the sensor unit 101 or the like in a short period of time as an input, or may be long-term recognition using the sensor data input over a long period of time, such as several hours, several days, or several years, as an input.

In FIG. 1, the position/surroundings recognition unit 110 and the recognition unit 111 that are mounted on each apparatus 100 are described as a single configuration, but are not limited thereto. For example, a plurality of the position/surroundings recognition units 110 may cooperate to achieve one or a plurality of the recognition units 111, or one position/surroundings recognition unit 110 may include a plurality of the recognition units 111. At that time, the one or a plurality of the position/surroundings recognition units 110 and/or the one or a plurality of the recognition units 111 may be configured by a position/surroundings recognition unit 110 and/or a recognition unit 111 that is mounted on each of different apparatuses 100.

Furthermore, the recognition unit 111 may be arranged, for example, in another unit in the apparatus 100, such as the apparatus management unit 120 or sensor unit 101 or the like, or may be arranged in the cloud 200, the on-site server 300, or the like connected to the apparatus 100 via the network, not limited to the position/surroundings recognition unit 110.

### -Apparatus management unit 120

The apparatus management unit 120 is a control unit that manages/controls overall operation of the apparatus 100. For example, in a case where the apparatus 100 is a mobile body such as a heavy machine or automobile, the apparatus management unit 120 may be a control unit such as an electronic control unit (ECU) that integrally controls the vehicle as a whole. Furthermore, for example, in a case where the apparatus 100 is a fixed or semi-fixed apparatus such as a sensor apparatus, the apparatus management unit 120 may be a control unit that controls the entire operation of the apparatus 100.

### -Others

The monitor 131 may be a display unit that presents various information to an operator of the apparatus 100, surrounding people, and the like.

The user interface 132 may be a user interface 132 for the operator to input settings for the apparatus 100, switching of display information, or the like. For the user interface 132, various input means such as a touch panel and a switch may be used.

The output unit 133 includes, for example, a lamp, a light emitting diode (LED), a speaker, or the like, and may be an output unit for presenting various information to the operator by a method different from that of the monitor 131 or for notifying the surroundings of planned operation of the apparatus 100 (turning right or turning left, lifting and lowering of a crane, or the like).

The operation system 135 may include, for example, a handle, an operation lever, a gear shift, various switches, and the like, and may be an operation unit for the operator to input operation information about traveling, operation, and the like of the apparatus 100. The apparatus control unit 134 may be a control unit that controls the apparatus 100 on the basis of the operation information input from the operation system 135 or a control signal input from the apparatus management unit 120.

### (Cloud 200)

The cloud 200 is a form of service that provides computer resources via a computer network such as the Internet, and includes, for example, one or more cloud servers arranged on the network. The cloud 200 includes, for example, a learning unit 201 for learning the recognition unit 111. For example, in a case where the recognition unit 111 is the inference unit including the learning model, the learning unit 201 trains the learning model by using supervised learning or unsupervised learning. The learning model after the training is downloaded to the apparatus 100 and implemented, for example, in the recognition unit 111 of the position/surroundings recognition unit 110. Furthermore, in a case where the recognition unit 111 is the rule-based recognition unit, the learning unit 201 manually or automatically creates/updates an algorithm for deriving an output as the result of the recognition from an input. A program in which the created/updated algorithm is described is downloaded to the apparatus 100 and performed, for example, in the recognition unit 111 of the position/surroundings recognition unit 110.

Note that, in a case where the recognition unit 111 is the inference unit including a learning model that is trained by the supervised learning, the sensor data acquired by the sensor unit 101 or the like of each apparatus 100 or the result of the recognition (also referred to as inference result) output from the recognition unit 111 may be transmitted to the learning unit 201 for the purpose of training or retraining the learning model. Furthermore, the retrained learning model may be downloaded to the apparatus 100 and incorporated into the recognition unit 111 to update the recognition unit 111.

Note that the learning unit 201 may be arranged in, not limited to the cloud 200, edge computing, such as fog computing or multi-access edge computing, that is performed in a core network of a base station, or may be implemented by a processor or the like, such as a digital signal processor (DSP), central processing unit (CPU), or graphics processing unit (GPU), that constitutes the signal processing units 103, 106, and 109 of the sensor unit 101 or the like. In other words, the learning unit 201 may be arranged anywhere in the information processing system 1.

### (On-site server 300)

The on-site server 300 is a server for managing at least one apparatus 100 introduced to at least one site. For example, in a case where the site is a construction site, the on-site server 300 includes a site management unit 301 and a construction planning unit 302.

The site management unit 301 collects various information from the position/surroundings recognition unit 110 of the apparatus 100. For example, the site management unit 301 collects the sensor data acquired by the sensor unit 101 or the like of the apparatus 100, the results of the recognition derived from the sensor data by the recognition unit 111, and the like. The collected various information is input to the construction planning unit 302. Note that the sensor data to be collected may be raw data acquired by the sensor unit 101 or the like, or may be processed data on which processing such as pixelation or cutting off is partially or entirely performed, in consideration of privacy or the like.

The construction planning unit 302 creates a schedule or the like of construction being performed on the site, on the basis of information input from the site management unit 301, and inputs the schedule or the like to the site management unit 301. Note that information such as the schedule created by the construction planning unit 302 of the on-site server 300 may be accumulated and managed in the on-site server 300 and reused for another apparatus 100 on the same site, an apparatus 100 on another site, or the like.

In addition, the site management unit 301 creates an action plan for managing and controlling each apparatus 100, on the basis of the schedule of construction input from the construction planning unit 302 and various information collected from the apparatus 100, and transmits the created action plan to the apparatus management unit 120 of each apparatus 100. Meanwhile, the apparatus management unit 120 of each apparatus 100 manages and controls each unit of the apparatus 100, according to the received action plan.

### 2. First Embodiment

Next, a first embodiment using the information processing system 1 described above will be described in detail below with reference to the drawings. In the first embodiment, a description will be made of recognition of an earthquake by using the information processing system 1 to improve current or future safety of the site.

### 2.1 Exemplary processing procedure

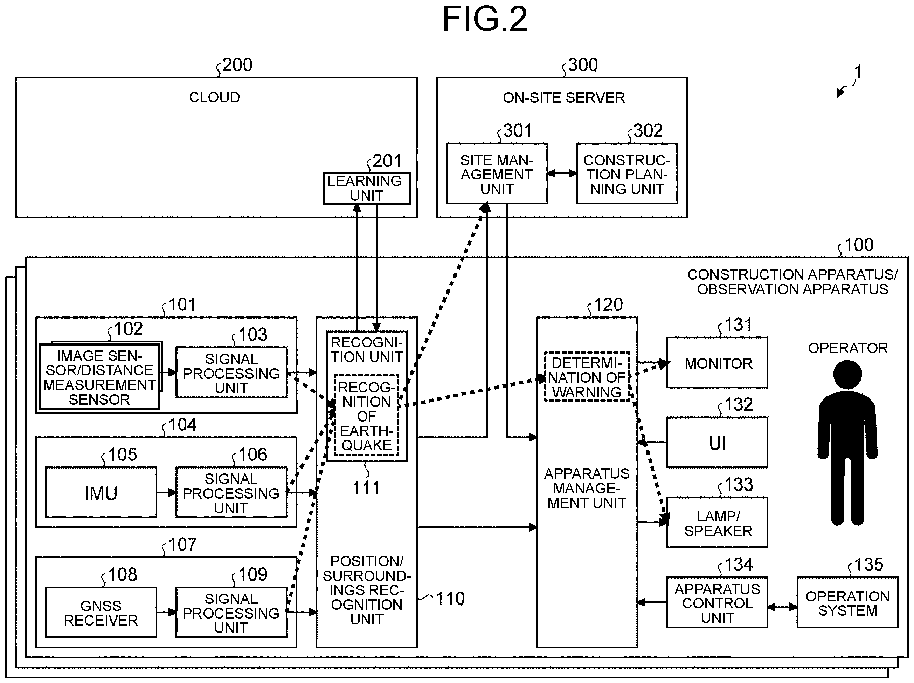

FIG. 2 is a diagram illustrating a process from recognition of the earthquake to warning to an operator in an information processing system 1 according to the present embodiment. As illustrated in FIG. 2, in a case where the information processing system 1 is applied to the recognition of the earthquake, the recognition unit 111 of the position/surroundings recognition unit 110 recognizes the presence or absence of the earthquake, with the sensor data input from the sensor unit 101 or the like as an input.

For example, in a case where the presence or absence of the earthquake is recognized on the basis of a rule, the recognition unit 111 may recognize occurrence of the earthquake, when the sensor data input from the sensor unit 101 indicates a value or change that is not assumed in a normal time, such as when the sensor data including a position, attitude (angle), speed (angular velocity), acceleration (each acceleration), or the like of the apparatus 100 indicates an extreme value or abrupt change, when an optical flow in continuous time-series image data indicates an extreme value or abrupt change, or when a distance to each subject in continuous time-series depth images indicates an abrupt change. In addition, the recognition unit 111 may recognize the occurrence of the earthquake when ground rumbling, odor (gas component), or the like specific to the occurrence of the earthquake is detected by the sensor unit 101 or the like.

Furthermore, in recognition of the earthquake with a learning model using a neural network, the recognition unit 111 may recognize occurrence of the earthquake, when the sensor data obtained from the sensor unit 101 or the like such as the image sensor is input to the learning model on the inside and an output from the learning model indicates the earthquake.

Note that for recognition of the earthquake by the recognition unit 111, different learning models may be used for the respective apparatuses 100 or different sensor data may be input to the respective apparatuses 100. Furthermore, the recognition unit 111 may recognize information about a size (seismic intensity, magnitude, etc.) of the earthquake having occurred, damage (the number of deaths, the number of injuries, the amount of damage, etc.) predicted from the size of the earthquake, a situation, or the like, not limited to the presence or absence of the earthquake.

For example, two approaches can be considered for training or retraining of the recognition unit 111 that recognizes such an earthquake.

The first approach is a method of training or retraining the learning model by using sensor data generated by an earthquake simulation or the like. In that case, the learning model may be trained or retrained using a pair of information such as a size of an earthquake, a terrain and depth of an epicenter, set upon the simulation, and information such as sensor data and damage or situation generated by the simulation, as training data.

The second approach is a method of training or retraining the learning model by an abnormality detection method. In this method, the learning model is trained using the sensor data detected while no earthquake occurs. In this case, the trained learning model outputs, as a result of the recognition, detection of abnormality, that is, occurrence of the earthquake in response to input of the sensor data that is not assumed in the normal time but acquired upon occurrence of the earthquake.

When the recognition unit 111 recognizes the earthquake, the result of the recognition is input to the apparatus management unit 120. On the basis of the input result of the recognition, the apparatus management unit 120 determines whether the warning to the operator is required or determines an intensity of warning (hereinafter, also referred to as warning level), and performs the warning to the operator on the basis of a result of the determination. A method for warning to the operator may be, for example, warning via the monitor 131 or warning via the output unit 133 such as the lamp, LED, or speaker. Here, the warning level may be, for example, the intensity of sound, light, or display on the monitor, or the like. In addition to the warning to the operator, the apparatus management unit 120 may perform a danger avoidance action such as emergency stop of the apparatus 100 or automatic movement of the apparatus 100 to a safe place.

Furthermore, the result of the recognition by the recognition unit 111 may be transmitted to the on-site server 300. At that time, in addition to the result of the recognition, the sensor data (raw data or processed data on which processing such as pixelation is performed) acquired by the sensor unit 101 or the like may also be transmitted to the on-site server 300. Transmitting image data, distance measurement data, or the like acquired by the sensor unit 101, in addition to the result of the recognition, to the on-site server 300 enables to increase the reliability of determination of the situation in on-site management.

In a case where the recognition unit 111 recognizes events, such as the earthquake, that occurs in a wide range, aggregating the results of the recognition and sensor data, acquired from a plurality of sites to the on-site server 300 makes it possible to perform diversified site management in a wider range, such as overall situation determination and instruction for multiple sites or sharing a situation or the like of a certain site with another site.

Furthermore, the sensor data and the result of the recognition acquired when the recognition unit 111 recognizes the earthquake may be transmitted to the cloud 200, for analyzation, and used for training or retraining of the learning model. Here, the sensor data acquired when the earthquake is recognized may be sensor data acquired by the sensor unit 101 or the like in a certain period before and after the occurrence of the earthquake.

### 2.2 Exemplary operation procedure

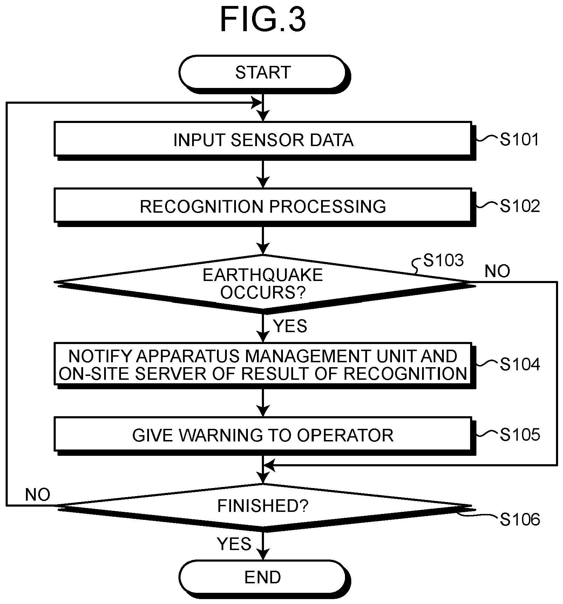

FIG. 3 is a flowchart illustrating an exemplary operation procedure in the information processing system 1 according to the present embodiment. As illustrated in FIG. 3, in the present embodiment, the sensor data acquired by the sensor unit 101 or the like is input first to the recognition unit 111 of the position/surroundings recognition unit 110, in the information processing system 1 (Step S101). The sensor data from the sensor unit 101 or the like may be periodically input, or may be input as necessary, for example, when the sensor data indicates an abnormal value. In addition, the sensor data input from the sensor unit 101 or the like may be raw data or processed data on which processing such as pixelation is performed.

Next, the recognition unit 111 performs recognition processing on the basis of the input sensor data (Step S102). As described above, the recognition unit 111 may output, as the result of the recognition, the information about the size of the earthquake having occurred, the damage predicted from the size of the earthquake, the situation, or the like, in addition to the presence or absence of the earthquake.

In the recognition processing of Step S102, when it is recognized that no earthquake has occurred (NO in Step S103), the present operation proceeds to Step S106. On the other hand, when the occurrence of the earthquake is recognized (YES in Step S103), the position/surroundings recognition unit 110 inputs the result of the recognition output from the recognition unit 111 to the apparatus management unit 120, and transmits the result of the recognition to the on-site server 300 via the predetermined network (Step S104).

Next, the apparatus management unit 120 gives warning to the operator via the monitor 131 or the output unit 133 on the basis of the input result of the recognition (Step S105), and the process proceeds to Step S106. At that time, when the result of the recognition includes the information about the size of the earthquake having occurred, the damage predicted from the size of the earthquake, the situation, or the like, the apparatus management unit 120 may give the warning, according to the scale of the earthquake, the damage predicted from the size of the earthquake, the situation, or the like. In addition to the warning to the operator, the apparatus management unit 120 may perform the danger avoidance action such as the emergency stop of the apparatus 100 or automatic movement of the apparatus 100 to a safe place.

In Step S106, the control unit that controls the apparatus 100 determines whether to finish the present operation, and when it is determined to finish the present operation (YES in Step S106), the present operation is finished. On the other hand, when it is determined not to finish the present operation (NO in Step S106), the present operation returns to Step S101, and the subsequent processing is performed.

### 2.3 Conclusion

As described above, according to the present embodiment, it is possible to accurately recognize the presence or absence of the earthquake on the basis of one or more pieces of sensor data input from the sensor unit 101 or the like, thus, improving current or future safety of the site.

### 3. Second Embodiment

Next, a second embodiment using the information processing system 1 described above will be described in detail below with reference to the drawings. In the second embodiment, a description will be made of recognition of occurrence of an accident by using the information processing system 1 to improve current or future safety of the site. Note that in the following description, the same configurations, operations, and effects as those of the embodiment described above are cited, and the redundant description thereof will be omitted.

### 3.1 Exemplary processing procedure

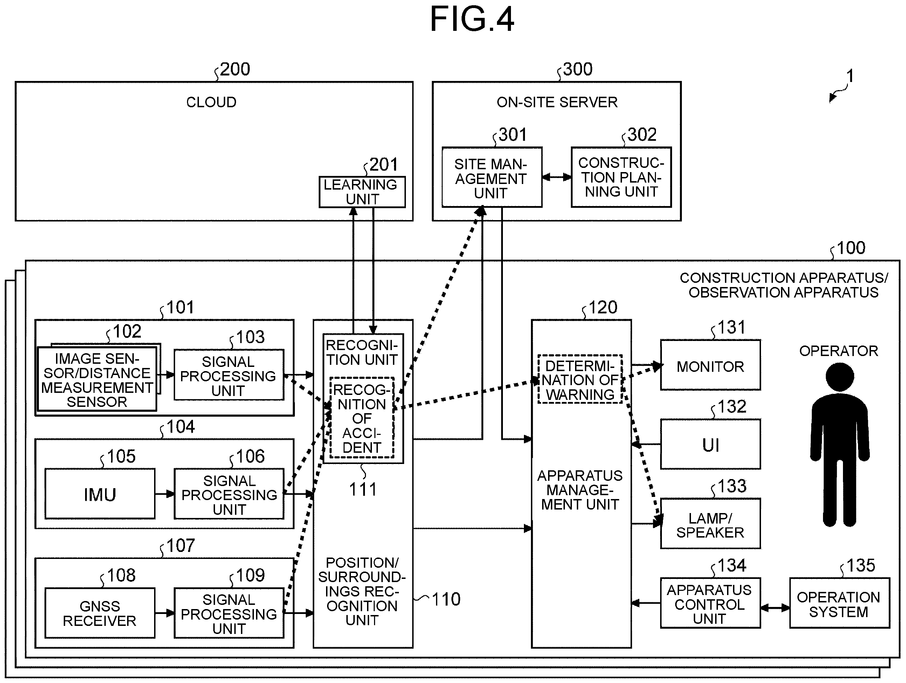

FIG. 4 is a diagram illustrating a process from recognition of the accident to warning to the operator in the information processing system 1 according to the present embodiment. As illustrated in FIG. 4, in a case where the information processing system 1 is applied to the recognition of the accident, the recognition unit 111 of the position/surroundings recognition unit 110 recognizes the presence or absence of the accident, with the sensor data input from the sensor unit 101 or the like as an input. Note that the accident in the present embodiment may include an accident in which the apparatus 100 itself is involved, an accident that occurs around the apparatus 100 and the apparatus 100 observes the accident as a third party, and the like.

For example, in a case where occurrence of the accident is recognized on the basis of a rule, the recognition unit 111 may recognize the occurrence of the accident, when a value or state directly or indirectly acquired from the sensor data input from the sensor unit 101 indicates a value or a state or change that is not assumed in a normal time, such as when the sensor data including a position, attitude (angle), speed (angular velocity), acceleration (each acceleration), or the like, acquired by the sensor unit 101 or the like mounted to a movable unit or the like, such as the arm, boom, swing body of the apparatus 100, indicates an extreme value or abrupt change, when the operator applies a hard brake or sudden brake where the apparatus 100 is a machine body or the like with the brake, when an emergency stop button is pressed by the operator, when a crawler or tire of the apparatus 100 spins, when a vibration occurring in the apparatus 100 and a duration thereof indicates an extreme value or abrupt change, when the operator operating the apparatus 100 shows a specific facial expression, when a body temperature, heart rate, brain waves, or the like of the operator operating the apparatus 100 indicates an extreme value or abrupt change, or when a load weight of the apparatus 100 indicates an extreme value or abrupt change, in addition to when the sensor data including a position, attitude (angle), speed (angular velocity), acceleration (each acceleration), or the like of the apparatus 100 indicates an extreme value or abrupt change, when an optical flow in continuous time-series image data indicates an extreme value or abrupt change, or when a distance to each subject in continuous time-series depth images indicates an abrupt change.

Furthermore, in recognition of the occurrence of the accident with a learning model using a neural network, the recognition unit 111 may recognize the occurrence of the accident, when the sensor data obtained from the sensor unit 101 or the like such as the image sensor is input to the learning model on the inside and an output from the learning model indicates that the accident has occurred.

Determining the occurrence of the event as described above as the occurrence of the accident by the recognition unit 111 makes it possible to recognize, as the accident, falling down of the apparatus 100 from a high place such as a cliff or a building, crashing of the apparatus 100 where the apparatus 100 is a flying object, collision of the apparatus 100 with a person, construction, natural object (tree, rock, or the like), or another apparatus 100, collapsing of a ceiling, ground, wall, cliff, or the like around the apparatus 100, falling of a load on the apparatus 100, or the like. However, the present invention is not limited thereto, and the recognition unit 111 may recognize various events as the accidents, on the basis of various sensor data.

Note that for the recognition of the accident by the recognition unit 111, different learning models may be used for the respective apparatuses 100 or different sensor data may be input for the respective apparatuses 100. Furthermore, the recognition unit 111 may recognize information about a scale (a range, the number of deaths, the number of injuries, and the like) of the accident having occurred, damage (the number of dead, number of injured, amount of damage, and the like) predicted from the scale of the accident, a situation, or the like, not limited to the presence or absence of the accident.

For training or retraining of the recognition unit 111 that recognizes such an accident, for example, the method using simulation, the method using abnormality detection, or the like may be used, likewise the recognition unit 111 (first embodiment) that recognizes the earthquake.

When the recognition unit 111 recognizes the accident, a result of the recognition may be input to the apparatus management unit 120 and used for the warning to the operator or a danger avoidance action, as in the first embodiment.

In addition, the result of the recognition by the recognition unit 111 may be transmitted to the on-site server 300, together with the sensor data (raw data or processed data on which processing such as pixelation is performed) acquired by the sensor unit 101 or the like at that time, as in the first embodiment.

In addition, notification of information about the accident recognized by a recognition unit 111 of a certain apparatus 100 may be given to and shared with the another apparatus 100 operating on the same site.

Note that recognition of the accident that has occurred in the certain apparatus 100 may be performed not by the recognition unit 111 in the certain apparatus 100 but by a recognition unit arranged in the another apparatus 100, the cloud 200, or the on-site server 300. For example, sensor data acquired by a sensor unit 101 or the like of the certain apparatus 100 may be shared with the another apparatus 100, the cloud 200, and the on-site server 300 so that the presence or absence of the accident is recognized by recognition units included in the another apparatus 100, the cloud 200, and the on-site server 300.

Furthermore, the sensor data and the result of the recognition acquired when the recognition unit 111 recognizes the accident may be transmitted to the cloud 200, for analyzation, and used for training or retraining of the learning model. Here, the sensor data acquired when the accident is recognized may be sensor data that is acquired by the sensor unit 101 or the like in a certain period before and after the occurrence of the accident.

### 3.2 Exemplary operation procedure

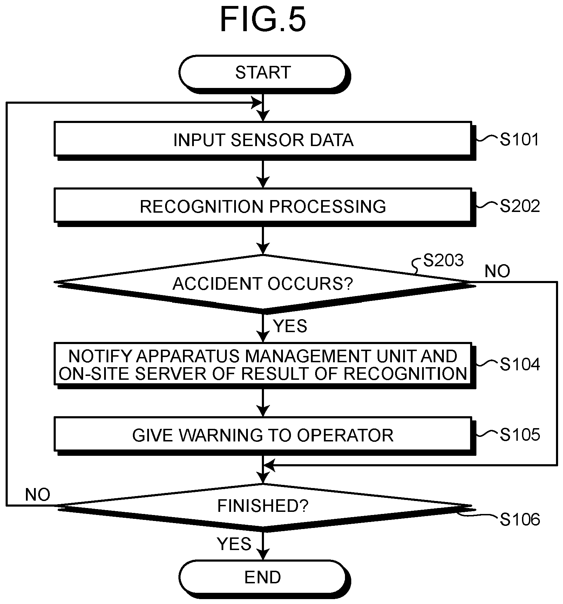

FIG. 5 is a flowchart illustrating an exemplary operation procedure in the information processing system 1 according to the present embodiment. As illustrated in FIG. 5, in the present embodiment, in the operation similar to the operation described with reference to FIG. 3 in the first embodiment, Steps S102 and S103 are replaced with Steps S202 and S203.

In Step S202, the recognition unit 111 performs recognition processing on the basis of the input sensor data to recognize the presence or absence of the accident. At that time, the information about the scale of the accident having occurred, the damage predicted from the scale of the accident, the situation, or the like may be output as the result of the recognition.

In Step S203, as in Step S103 in FIG. 3, when it is recognized that no accident has occurred in the recognition processing in Step S202 (NO in Step S203), the present operation proceeds to Step S106, and when the occurrence of the accident is recognized (YES in Step S203), the result of the recognition is input to the apparatus management unit 120 and transmitted to the on-site server 300 via the predetermined network (Step S104).

Note that when the information about the scale of the accident having occurred, the damage predicted from the scale of the accident, the situation, or the like is included in the result of the recognition, the warning according to the scale of the accident, the damage predicted from the scale of the accident or the situation, or the like may be given, in Step S105. In addition to the warning to the operator, the apparatus management unit 120 may perform the danger avoidance action such as the emergency stop of the apparatus 100 or automatic movement of the apparatus 100 to a safe place.

### 3.3 Conclusion

As described above, according to the present embodiment, it is possible to accurately recognize the presence or absence of the accident on the basis of one or more pieces of sensor data input from the sensor unit 101 or the like, thus, improving current or future safety of the site. Note that the other configurations, operations, and effects may be similar to those of the embodiment described above, and detailed description thereof will be omitted here.

### 4. Third Embodiment

Next, a third embodiment using the information processing system 1 described above will be described in detail below with reference to the drawings. In the third embodiment, a description will be made of recognition of a potential incident state by using the information processing system 1 to improve current or future safety of the site. Note that the potential incident state in the present description refers to a situation (also referred to as a situation leading to an accident) that has not led to the accident yet but is almost in the accident, such as making a person feel a sudden fear or feel startled. In addition, in the following description, the same configurations, operations, and effects as those of the embodiments described above are cited, and the redundant description thereof will be omitted.

### 4.1 Exemplary processing procedure

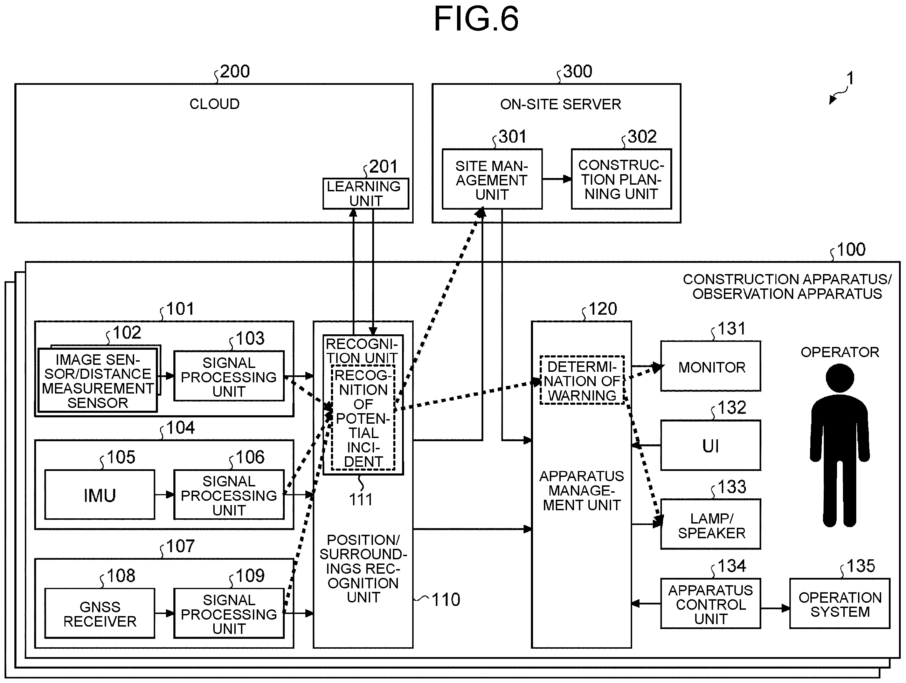

FIG. 6 is a diagram illustrating a process from recognition of the potential incident state to warning to the operator in the information processing system 1 according to the present embodiment. As illustrated in FIG. 6, in a case where the information processing system 1 is applied to the recognition of the potential incident state, the recognition unit 111 of the position/surroundings recognition unit 110 recognizes the potential incident state of the apparatus 100 or the surroundings of the apparatus 100, with the sensor data input from the sensor unit 101 or the like as an input.

The recognition of the potential incident state may be performed, for example, by extracting "accident with no injuries" in Heinrich's law (accident triangle). Therefore, in a case where the potential incident state is recognized on the basis of a rule, the recognition unit 111 may recognize the potential incident state, when a value or state directly or indirectly acquired from the sensor data input from the sensor unit 101 indicates a value or a state or change that is not assumed in a normal time, such as when the sensor data including a position, attitude (angle), speed (angular velocity), acceleration (each acceleration), or the like, acquired by the sensor unit 101 or the like mounted to a movable unit or the like, such as the arm, boom, swing body of the apparatus 100, indicates an extreme value or abrupt change, when the operator applies a hard brake or sudden brake where the apparatus 100 is a machine body or the like with the brake, when an emergency stop button is pressed by the operator, when a crawler or tire of the apparatus 100 spins, when a vibration occurring in the apparatus 100 and a duration thereof indicates an extreme value or abrupt change, when the operator operating the apparatus 100 shows a specific facial expression, when a body temperature, heart rate, brain waves, or the like of the operator operating the apparatus 100 indicates an extreme value or abrupt change, or when a load weight of the apparatus 100 indicates an extreme value or abrupt change, in addition to when the sensor data including a position, attitude (angle), speed (angular velocity), acceleration (each acceleration), or the like of the apparatus 100 indicates an extreme value or abrupt change, when an optical flow in continuous time-series image data indicates an extreme value or abrupt change, or when a distance to each subject in continuous time-series depth images indicates an abrupt change.

Furthermore, in recognition of the potential incident state with a learning model using a neural network, the recognition unit 111 may recognize the potential incident state, when the sensor data obtained from the sensor unit 101 or the like such as the image sensor is input to the learning model on the inside and an output from the learning model indicates the potential incident state.

Determining the occurrence of the event as described above as the potential incident state by the recognition unit 111 makes it possible to recognize, as the potential incident state, likelihood of falling down of the apparatus 100 from a high place such as a cliff or a building, likelihood of crashing of the apparatus 100 where the apparatus 100 is a flying object, likelihood of colliding of the apparatus 100 with a person, construction, natural object (tree, rock, or the like), or another apparatus 100, likelihood of collapsing of a ceiling, ground, wall, cliff, or the like around the apparatus 100, likelihood of falling of a load on the apparatus 100, or the like. However, the present invention is not limited thereto, and the recognition unit 111 may recognize various events as the potential incident state, on the basis of various sensor data.

For training or retraining of the recognition unit 111 that recognizes such a potential incident state, for example, the method using simulation, the method using abnormality detection, or the like may be used, likewise the recognition unit 111 (first and second embodiments) that recognizes the earthquake and accident.

When the recognition unit 111 recognizes the potential incident state, a result of the recognition may be input to the apparatus management unit 120 and used for the warning to the operator or a danger avoidance action, as in the above embodiments.

In addition, the result of the recognition by the recognition unit 111 may be transmitted to the on-site server 300, together with the sensor data (raw data or processed data on which processing such as pixelation is performed) acquired by the sensor unit 101 or the like at that time, as in the embodiments described above.

In addition, notification of whether a certain apparatus 100 is in the potential incident state recognized by a recognition unit 111 of the certain apparatus 100 may be given to and shared with another apparatus 100 operating in the same site.

Note that recognition of whether the certain apparatus 100 is in the potential incident state may be performed not by the recognition unit 111 in the certain apparatus 100 but by a recognition unit arranged in the another apparatus 100, the cloud 200, or the on-site server 300. For example, sensor data acquired by a sensor unit 101 or the like of the certain apparatus 100 may be shared with the another apparatus 100, the cloud 200, and the on-site server 300 so that the potential incident state is recognized by recognition units included in the another apparatus 100, the cloud 200, and the on-site server 300.

Furthermore, the sensor data and the result of the recognition acquired when the recognition unit 111 recognizes the potential incident state may be transmitted to the cloud 200, for analyzation, and used for training or retraining of the learning model. Here, the sensor data acquired when the potential incident state is recognized may be sensor data that is acquired by the sensor unit 101 or the like in a certain period before and after the occurrence of the potential incident state.

### 4.2 Exemplary operation procedure

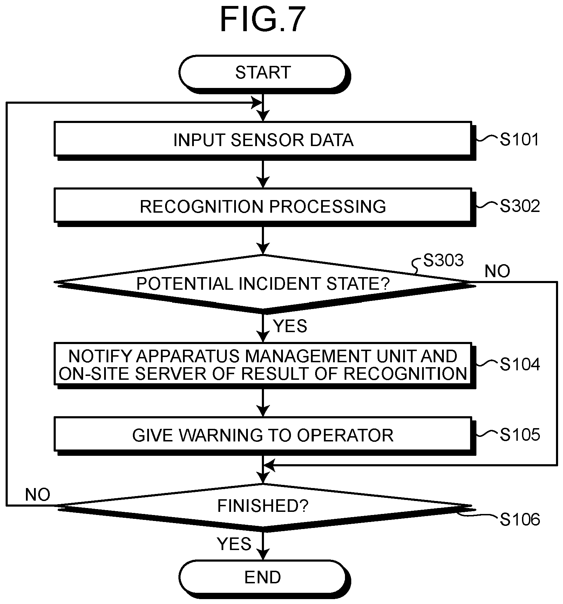

FIG. 7 is a flowchart illustrating an exemplary operation procedure in the information processing system 1 according to the present embodiment. As illustrated in FIG. 7, in the present embodiment, in the operation similar to the operation described with reference to FIG. 3 in the first embodiment, Steps S102 and S103 are replaced with Steps S302 and S303.

In Step S302, the recognition unit 111 performs recognition processing on the basis of the input sensor data to recognize whether the apparatus 100 is in the potential incident state. At that time, information indicating how much danger the apparatus 100 is in, or the like may be output as a result of the recognition.

In Step S303, as in Step S103 in FIG. 3, when it is recognized that the apparatus 100 is not in the potential incident state in the recognition processing in Step S302 (NO in Step S303), the present operation proceeds to Step S106, and when it is recognized that the apparatus 100 is in the potential incident state (YES in Step S303), the result of the recognition is input to the apparatus management unit 120 and transmitted to the on-site server 300 via the predetermined network (Step S104).

Note that, when the information indicating how much danger the apparatus 100 is in, or the like is included in the result of the recognition, warning according to the information indicating how much danger the apparatus 100 is in, or the like may be given in Step S105. In addition to the warning to the operator, the apparatus management unit 120 may perform the danger avoidance action such as the emergency stop of the apparatus 100 or automatic movement of the apparatus 100 to a safe place.

### 4.3 Conclusion

As described above, according to the present embodiment, it is possible to accurately recognize whether the apparatus 100 is in the potential incident state on the basis of one or more pieces of sensor data input from the sensor unit 101 or the like, thus, improving current or future safety of the site. Note that the other configurations, operations, and effects may be similar to those of the embodiments described above, and detailed description thereof will be omitted here.

### 5. Fourth Embodiment

Next, a fourth embodiment using the information processing system 1 described above will be described in detail below with reference to the drawings. In the fourth embodiment, a description will be made of recognition of a dangerous state by using the information processing system 1 to improve current or future safety of the site. Note that the dangerous state in the present description may represent a level of possibility of occurrence of an accident based on motion or situation of the apparatus 100 itself or a surrounding person or thing, in other words, a possibility (also referred to as dangerousness) of danger to a target to be protected, such as the apparatus 100 itself or the surrounding people or thing. In addition, in the following description, the same configurations, operations, and effects as those of the embodiments described above are cited, and the redundant description thereof will be omitted.

### 5.1 Exemplary processing procedure

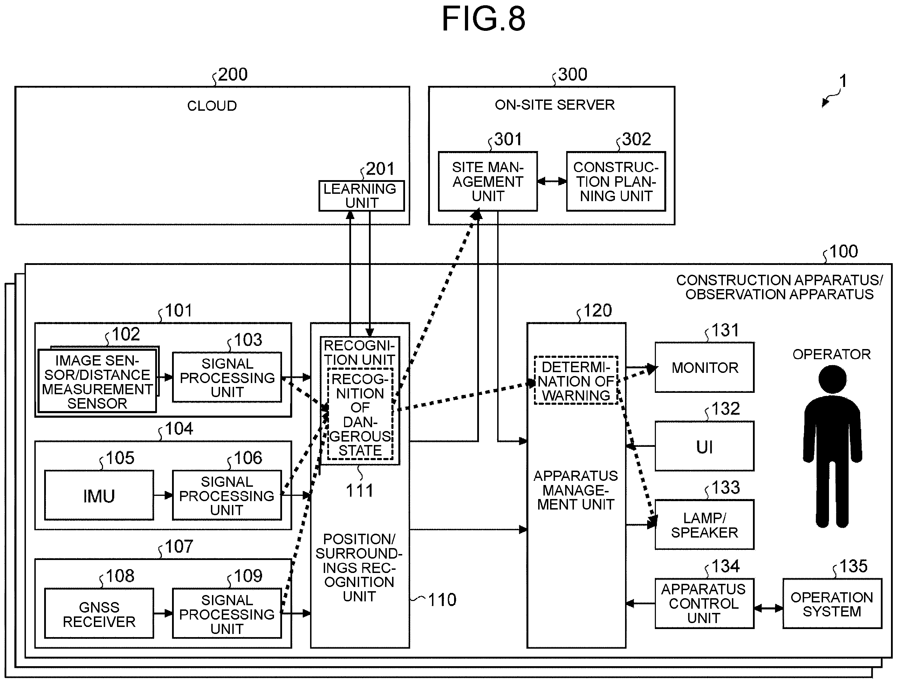

FIG. 8 is a diagram illustrating a process from recognition of the dangerous state to warning to the operator in the information processing system 1 according to the present embodiment. As illustrated in FIG. 8, in a case where the information processing system 1 is applied to the recognition of the dangerous state, the recognition unit 111 of the position/surroundings recognition unit 110 recognizes the dangerous state of the apparatus 100 or the surroundings of the apparatus 100, with the sensor data input from the sensor unit 101 or the like as an input.

Here, for example, in a case where the apparatus 100 is a dump truck, operation of the apparatus 100 that brings the apparatus 100 or the surrounding person or thing into the dangerous state applies to, traveling forward/backward, dumping of a dump bed, and the like. In addition, for example, in a case where the apparatus 100 is an excavator, the operation of the apparatus 100 that brings the apparatus 100 or the surrounding person or object into the dangerous state can apply to traveling forward/backward, swinging of an upper swing body, operation of a boom, arm, or bucket, or the like.

Furthermore, the danger may include not only occurrence of an accident, such as collision between the apparatus 100 and the target to be protected due to the operation of the apparatus 100, or collision between an object to be transported and moved due to the operation of the apparatus 100, and the object to be protected, but also impairment of the health of the target to be protected or damage of the target to be protected, such as heatstroke or frostbite of the operator, or occurrence of an earthquake. The target to be protected can include human, animal, a thing such as a construction or apparatus, or the like.

For example, the recognition unit 111 recognizes the dangerous state with the sensor data, such as image data, depth image data, IMU data, or GNSS data input from the sensor unit 101 or the like, as an input. Note that, in the dangerous state, a value or state directly or indirectly acquired from the sensor data does not always indicate a value or a state or change that is not assumed in a normal time. Therefore, for example, the recognition unit 111 may be trained using the more types of sensor data or sensor data acquired for a longer period of time than those for the recognition of the accident in the second embodiment or the recognition of the potential incident state in the third embodiment.

The data input to the recognition unit 111 can include all information acquired by the apparatus 100, in addition to the sensor data described above. For example, the data input to the recognition unit 111 can include information about a speed, torque, or the like of a crawler or tire, information about a position, attitude (angle), speed, acceleration, or the like of the apparatus 100, information about a position, angle, speed, or the like of a movable unit, such as an arm, boom, swing body, information about vibration of the apparatus 100, and further a load weight, a facial expression (camera image), body temperature, heart rate, brain waves, or the like of the operator.

Furthermore, the recognition unit 111 may output, as a result of the recognition, a degree of danger (hereinafter, also referred to as level of danger) when the apparatus 100 is in the dangerous state, in addition to whether the apparatus 100 is in the dangerous state. However, the present invention is not limited thereto, and the apparatus management unit 120 may determine the level of danger on the basis of the sensor data input from the sensor unit 101 or the like and the result of the recognition. For example, when the result of the recognition indicates the dangerous state, and approaching a cliff or the like is identified on the basis of the image data or the like in the sensor data, the apparatus management unit 120 may determine that the level of danger is high.

An intensity of warning (warning level) given to the operator by the apparatus management unit 120 may be changed, for example, according to the level of danger. For example, when the level of danger is very high, the apparatus management unit 120 may give a strong warning such as a warning sound or blinking a lamp to the operator, display a message of an operation stop instruction, or the like, or output an instruction for stopping the operation of the apparatus 100 to the apparatus control unit 134.

Note that the recognition unit 111 may infer, as part of the result of the recognition, a time period from the dangerous state to an actual dangerous state (potential incident state) or a time period from the dangerous state to occurrence of an accident (hereinafter referred to as predicted time). Then, the recognition unit 111 or the apparatus management unit 120 may determine that the shorter the inferred predicted time, the higher the level of danger.

Furthermore, the recognition unit 111 may infer the magnitude of danger predicted from the dangerous state, as part of the result of the recognition. Then, the recognition unit 111 or the apparatus management unit 120 may determine that the larger the magnitude of danger predicted, the higher the level of danger.

Furthermore, the recognition unit 111 may infer, as part of the result of the recognition, a target class or the like determined to have a risk of danger. Then, the recognition unit 111 or the apparatus management unit 120 may change the level of danger according to the inferred target class. For example, the recognition unit 111 or the apparatus management unit 120 may determine that the level of danger is high when the target class represents people or manned heavy machines, and may determine that the level of danger is low when the target class represents constructions, unmanned heavy machines, or the like.

Furthermore, the recognition unit 111 may infer, as part of the result of the recognition, the operation of the apparatus 100 or a direction thereof that can be a factor to cause transition of the dangerous state to the actual dangerous state. Then, when movement based on an operation input from the apparatus control unit 134 or a direction thereof, or next movement in an action plan received from the on-site server 300 or a direction thereof matches or approximates an operation or direction thereof that may be the factor to cause transition of the dangerous state to the actual dangerous state, the apparatus management unit 120 may give warning to the operator or display caution on the monitor 131.

For training or retraining of the recognition unit 111 that recognizes such a dangerous state, for example, the method using simulation, the method using abnormality detection, or the like may be used, as in the embodiments described above.

In addition, the result of the recognition by the recognition unit 111 may be transmitted to the on-site server 300, together with the sensor data (raw data or processed data on which processing such as pixelation is performed) acquired by the sensor unit 101 or the like at that time, as in the embodiments described above.

Note that recognition of whether a certain apparatus 100 is in the dangerous state may be performed not by the recognition unit 111 in the certain apparatus 100 but by a recognition unit arranged in another apparatus 100, the cloud 200, or the on-site server 300. For example, sensor data acquired by a sensor unit 101 or the like of the certain apparatus 100 may be shared with the another apparatus 100, the cloud 200, and the on-site server 300 so that the dangerous state is recognized by recognition units included in the another apparatus 100, the cloud 200, and the on-site server 300.

Furthermore, the sensor data and the result of the recognition acquired when the recognition unit 111 recognizes the dangerous state may be transmitted to the cloud 200, for analyzation, and used for training or retraining of a learning model. Here, the sensor data acquired when the dangerous state is recognized may be sensor data that is acquired by the sensor unit 101 or the like in a certain period before and after recognition of the dangerous state.

### 5.2 Exemplary operation procedure

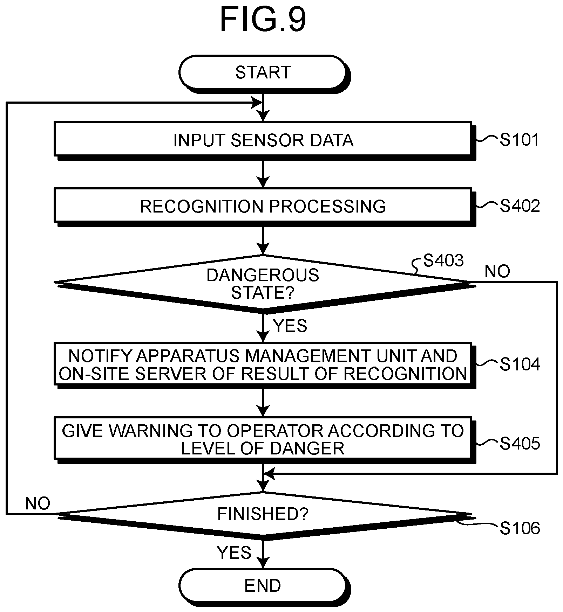

FIG. 9 is a flowchart illustrating an exemplary operation procedure in the information processing system 1 according to the present embodiment. As illustrated in FIG. 9, in the present embodiment, in the operation similar to the operation described with reference to FIG. 3 in the first embodiment, Steps S102, S103, and S105 are replaced with Steps S402, S403, and S405.

In Step S402, the recognition unit 111 performs recognition processing on the basis of the input sensor data to recognize whether the apparatus 100 is in the dangerous state. At that time, information about the level of danger, predicted time, magnitude of danger, movement being the factor and the direction thereof, or the like, may be output as the result of the recognition.

In Step S403, as in Step S103 in FIG. 3, when it is recognized that the apparatus 100 is not in the dangerous state in the recognition processing in Step S402 (NO in Step S403), the present operation proceeds to Step S106, and when it is recognized that the apparatus 100 is in the dangerous state (YES in Step S403), the result of the recognition is input to the apparatus management unit 120 and transmitted to the on-site server 300 via the predetermined network (Step S104).

In Step S405, the apparatus management unit 120 gives warning corresponding to the level of danger estimated by the recognition unit 111 or the apparatus management unit 120 to the operator.

Note that, when the information about the movement being the factor or the direction thereof is included in the result of the recognition, in addition to the level of danger, and further when the next movement of the apparatus 100 or the direction thereof matches or approximates the operation or direction thereof that may be the factor to cause transition of the dangerous state to the actual dangerous state, the apparatus management unit 120 may give warning or caution to the operator for the next movement, in Step S405.

### 5.3 Conclusion

As described above, according to the present embodiment, it is possible to accurately recognize whether the apparatus 100 is in the dangerous state on the basis of one or more pieces of sensor data input from the sensor unit 101 or the like, thus, improving current or future safety of the site. Note that the other configurations, operations, and effects may be similar to those of the embodiments described above, and detailed description thereof will be omitted here.

### 6. Fifth Embodiment

Next, a fifth embodiment using the information processing system 1 described above will be described in detail below with reference to the drawings. In the fifth embodiment, a description will be made of recognition or prediction of movement of a surrounding person, thing, area, or the like around the apparatus 100 by using the information processing system 1 to improve current or future safety of the site. Note that in the following description, the same configurations, operations, and effects as those of the embodiments described above are cited, and the redundant description thereof will be omitted.

### 6.1 Exemplary processing procedure

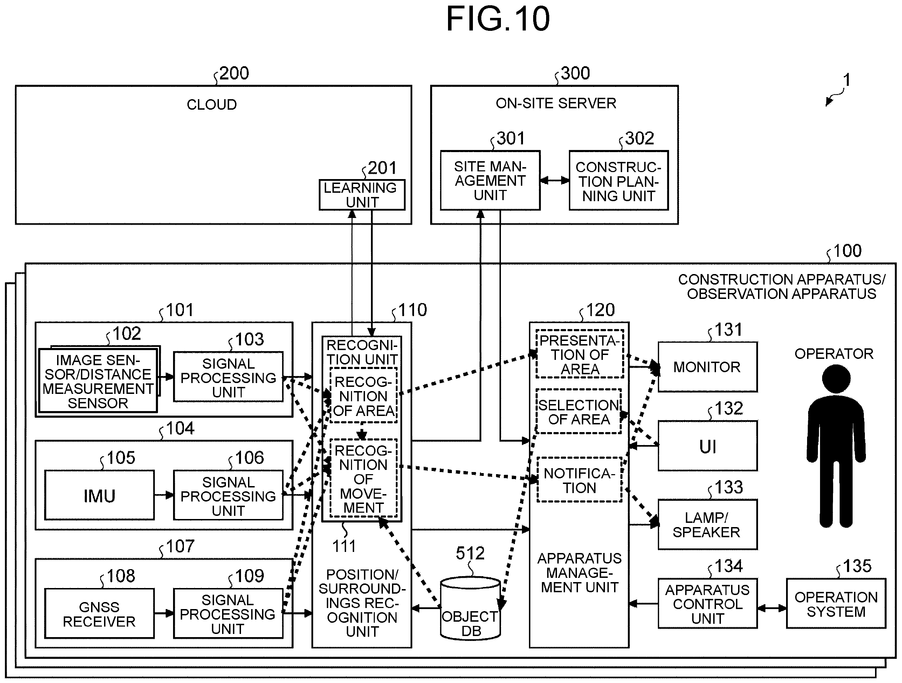

FIG. 10 is a diagram illustrating a process from movement recognition to notification (may also include warning) to the operator in the information processing system 1 according to the present embodiment. As illustrated in FIG. 10, in a case where the information processing system 1 is applied to movement recognition/movement prediction, the recognition unit 111 of the position/surroundings recognition unit 110 recognizes and/or predicts movement of an object belonging to a specific area or an object belonging to a predetermined range around the apparatus 100, with the sensor data input from the sensor unit 101 or the like as an input. Furthermore, each apparatus 100 is provided with an object database 512.

The recognition unit 111 uses image data, depth image data, IMU data, GNSS data, or the like input from the sensor unit 101 or the like as an input to perform area recognition processing of recognizing the presence or positions of a person and thing being around the apparatus 100 or recognizing an area where the person and thing are positioned by semantic segmentation or the like.

The apparatus management unit 120 presents (area presentation), as auxiliary information of the operation of the apparatus 100, the presence of a person, a thing, or the like (hereinafter, also referred to as an object) and a result of the semantic segmentation (the area or the position where the object is positioned), to the operator via the monitor 131, on the basis of a result of the area recognition processing by the recognition unit 111. Meanwhile, the operator inputs selection of a target to which attention is to be paid, that is, an area (an area where the object is positioned, a specific area based on the apparatus 100, or the like) being a target of the movement recognition by the recognition unit 111, of the presented areas of the objects and the like, for example, by using the UI 132 or the like.

As examples of the object, the human and thing (including another apparatus 100 and the like) that are positioned within a certain range from the apparatus 100 are considered, in addition to a floor, wall, and ceiling of a construction such as a building and tunnel (may be being tore down), an indoor and outdoor ground, cliff, and slope. Furthermore, as examples of the area, an area within a certain range from the apparatus 100, and specific areas such as a passage and entrance are considered, in addition to the area where the object is positioned.

When the selection of the area being the target of the movement recognition is input from the operator, the apparatus management unit 120 registers "the view and position of the object or area" (hereinafter, also referred to as object information) of the selected area or the object corresponding to the selected area, in the object database 512.

Here, "the view" in the object information may be the result of the recognition by the recognition unit 111, or may be an "appearance" such as a shape, pattern (texture), color, or material of the object or area. Furthermore, the "position" may be any of a position on an image or an absolute position in the site, or a combination thereof. Specifically, for example, in a case where the apparatus 100 is a semi-fixed observation apparatus that is immovable, the "position" may be the position on the image. On the other hand, in a case where the apparatus 100 is a movable machine body, the "position" may be an absolute position in the site. In a case where the apparatus 100 is operable while moving or is operable while stopping, both the position on the image and the absolute position in the site may be used.

In this way, when the object information is registered in the object database 512, the recognition unit 111 performs movement recognition processing for the selected area or the object corresponding to the area (i.e., the object or area registered in the object database 512), with the sensor data input from the sensor unit 101 as an input.

In the movement recognition processing, the recognition unit 111 performs the movement recognition for the selected object or area, for example, with the sensor data such as the image data, depth image data, IMU data, or GNSS data input from the sensor unit 101 or the like, as an input. Therefore, when movement of the selected object or area is detected, the recognition unit 111 notifies the apparatus management unit 120 of the movement. Meanwhile, the apparatus management unit 120 notifies the operator of the movement of the selected object or area, via the monitor 131 or the output unit 133.

Note that the object information registered in an object database 512 of a certain apparatus 100 may be collected to the on-site server 300 to be shared with the another apparatus 100 on the same site, an apparatus 100 on another site, and the like. This configuration makes it possible to monitor, for example, the movement recognition for the object or area specified (selected) to be tracked by one apparatus 100, by the another apparatus 100 or two or more apparatuses 100. At that time, the collection of the object information by the on-site server 300 and the sharing of the object information between the apparatuses 100 (downloading to the apparatuses 100) may be automatically performed by the apparatus 100 or the on-site server 300, or may be manually performed by the operators. Furthermore, the movement of the target recognized by the certain apparatus 100 may be shared with the another apparatus 100 via the on-site server 300.

Furthermore, the object information registered in the object database 512 may be uploaded to the cloud 200, for analyzation, and used for training or retraining of a learning model. This configuration makes it possible to improve the recognition performance of the recognition unit 111. For training or retraining of the recognition unit 111, for example, a method using simulation, the method using simulation, the method using abnormality detection, or the like may be used, as in the embodiments described above.

Furthermore, in the above description, the recognition of the actual movement of the selected target by the recognition unit 111 has been described, but the present invention is not limited thereto, and the recognition unit 111 may perform movement prediction processing of predicting the movement of the selected target. For example, a change in amount of spring water around the target, a cloud of dust around the target, surrounding abnormal noise, atmospheric components, or the like can be detected by the sensor unit 101 or the like, inferring the possibility of movement of the target, by using the change in amount of spring water around the target, the cloud of dust around the target, the surrounding abnormal noise, the atmospheric components, or the like, as an input to the recognition unit 111.

In addition, the result of the recognition by the recognition unit 111 may be transmitted to the on-site server 300, together with the sensor data (raw data or processed data on which processing such as pixelation is performed) acquired by the sensor unit 101 or the like at that time, as in the embodiments described above.

### 6.2 Exemplary operation procedure

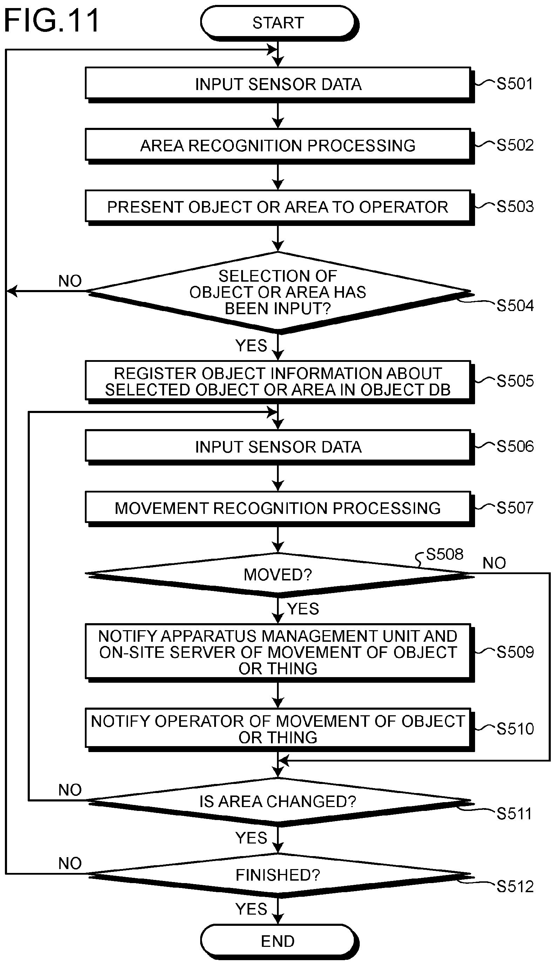

FIG. 11 is a flowchart illustrating an exemplary operation procedure in the information processing system 1 according to the present embodiment. As illustrated in FIG. 11, in the present embodiment, an area as a monitoring target is selected first, in the information processing system 1. Specifically, for example, as in Step S101 in FIG. 3 the sensor data acquired by the sensor unit 101 or the like is input first to the recognition unit 111 of the position/surroundings recognition unit 110 (Step S501).

Next, the recognition unit 111 performs the area recognition processing on the basis of the input sensor data (Step S502). In the area recognition processing, as described above, for example, the area where the object is positioned is labeled by the semantic segmentation or the like, and the area of the object is identified. The recognized object and area are notified to the apparatus management unit 120.

Next, the apparatus management unit 120 presents the recognized object and area to the operator via the monitor 131 (Step S503). On the other hand, when the selection of the object or area is input from the operator by using, for example, the UI 132 or the like (YES in Step S504), the apparatus management unit 120 registers the object information about the selected object or area in the object database 512 (Step S505). Note that when the selection by the operator is not input (NO in Step S504), the present operation returns to Step S501.

Next, the movement recognition for the object or area selected as the monitoring target is performed. Specifically, for example, as in Step S101 in FIG. 3 the sensor data acquired by the sensor unit 101 or the like is input first to the recognition unit 111 of the position/surroundings recognition unit 110 (Step S506).

Next, the recognition unit 111 performs the movement recognition processing on the basis of the input sensor data (Step S507). In the movement recognition processing, for example, the movement of the object or area may be recognized from the image data, depth image data, or the like.

Next, the recognition unit 111 determines whether the selected object or area makes a movement, on the basis of a result of the movement recognition processing (Step S508). When the selected object or area has made no movement (NO in Step S508), the present operation proceeds to Step S511. On the other hand, when the selected object or area has made a movement (YES in Step S508), the recognition unit 111 notifies the apparatus management unit 120 of the movement of the selected object or area (Step S509). Note that notification of the movement of the selected object or area may be sent from the recognition unit 111 or the apparatus management unit 120 to the on-site server 300 and shared with the another apparatus 100.

Meanwhile, the apparatus management unit 120 notifies the operator of the movement of the selected object or area, for example, via the monitor 131 or the output unit 133 (Step S510).

Next, the apparatus management unit 120 determines whether to change the object or area as the monitoring target on the basis of, for example, an operation or the like input by the operator from the UI 132 or the like (Step S511). When the object or area as the monitoring target is not changed (NO in Step S511), the present operation returns to Step S506.

On the other hand, when the area as the monitoring target is changed (YES in Step S511), the control unit that controls the apparatus 100 determines whether to finish the present operation, and when it is determined to finish the present operation (YES in Step S512), the present operation is finished. On the other hand, when it is determined not to finish the present operation (NO in Step S512), the present operation returns to Step S501, and the subsequent processing is performed.

### 6.3 Conclusion

As described above, according to the present embodiment, it is possible to select the object or area as the monitoring target and monitor the selected monitoring target on the basis of one or more pieces of sensor data input from the sensor unit 101 or the like and monitor movement of the selected, thus, improving current or future safety of the site. Note that the other configurations, operations, and effects may be similar to those of the embodiments described above, and detailed description thereof will be omitted here.

### 7. Sixth Embodiment

Next, a sixth embodiment using the information processing system 1 described above will be described in detail below with reference to the drawings. In the sixth embodiment, a description will be made of recognition of an operator's fatigue by using the information processing system 1 to improve current or future safety of the site. Note that in the following description, the same configurations, operations, and effects as those of the embodiments described above are cited, and the redundant description thereof will be omitted.

### 7.1 Exemplary processing procedure

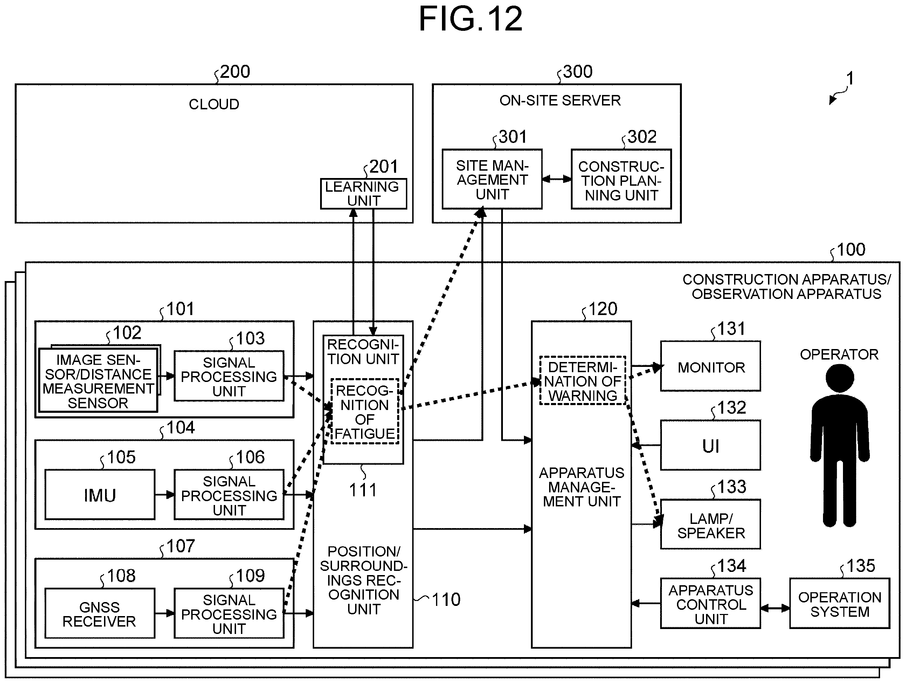

FIG. 12 is a diagram illustrating a process from recognition of the operator's fatigue to warning to the operator in the information processing system 1 according to the present embodiment. As illustrated in FIG. 12, in a case where the information processing system 1 is applied to the recognition of the operator's fatigue, the recognition unit 111 of the position/surroundings recognition unit 110 recognizes a degree of the operator's fatigue, with sensor data input from the sensor unit 101 or the like as an input.

The recognition unit 111 uses image data, depth image data, IMU data, GNSS data, or the like input from the sensor unit 101 or the like as an input to perform to perform fatigue recognition processing for recognizing the degree of the operator's fatigue.

In the fatigue recognition processing, for example, the recognition unit 111 may recognize the operator's fatigue by using an elapsed time from the start of the operation of the apparatus 100, continuous working hours of the operator, or the like as an input, in addition to the sensor data. The sensor data includes, for example, the image data, depth image data, IMU data, GNSS data, or the facial expression, body temperature, heart rate, or brain waves of the operator. The sensor data is input from the sensor unit 101 or the like that is mounted to an axle, driver's seat, arm unit, frame, crawler, or the like of the apparatus 100 or that is mounted to the operator him-/herself.

A learning model for recognizing the operator's fatigue may be trained or retrained on the basis of, for example, the behaviors, operations, or the like of the apparatus 100 when the operator is tired. However, the present invention is not limited thereto, and the learning model may be trained or retrained by, for example, abnormality detection learning based on normal behaviors of or operations for the apparatus 100 while the operator is not tired, or learning based on a difference between the behaviors, operations, or the like of the apparatus 100 at the start of the operation of the apparatus 100 and the behaviors, operations, or the like of the apparatus 100 at a point of time when a certain time has elapsed from the start of the operation, or the like.

Note that the learning model used for the recognition unit 111, a threshold used for determination, and the like may differ for each operator. At this time, a learning model, a determination threshold, or the like corresponding to an individual operator may be managed in the apparatus 100, the on-site server 300, the cloud 200, or the like on each site. For example, when the apparatus 100 holds no learning model, determination threshold, or the like corresponding to the individual operator, an inquiry may be made to the on-site server 300 or the cloud 200 to download necessary information. Furthermore, when no learning model, determination threshold, or the like corresponding to the individual operator is held in any of the apparatus 100, the on-site server 300, and the cloud 200, the recognition unit 111 may use a learning model or determination threshold prepared in advance as a template. In that case, the template may be managed in any of the apparatus 100, the on-site server 300, and the cloud 200.

When the degree of the operator's fatigue is high, the recognition unit 111 notifies the apparatus management unit 120 of the high operator's fatigue. Meanwhile, the apparatus management unit 120 notifies the operator of his/her fatigue via the monitor 131 or the output unit 133.

Furthermore, the fatigue of the operator of the apparatus 100 may be shared with the on-site server 300 or another apparatus 100 on the same site. This configuration makes it possible to improve the efficiency of operation on the site.

In addition, the result of the recognition by the recognition unit 111 may be transmitted to the on-site server 300, together with the sensor data (raw data or processed data on which processing such as pixelation is performed) acquired by the sensor unit 101 or the like at that time, as in the first embodiment.

### 7.2 Exemplary operation procedure

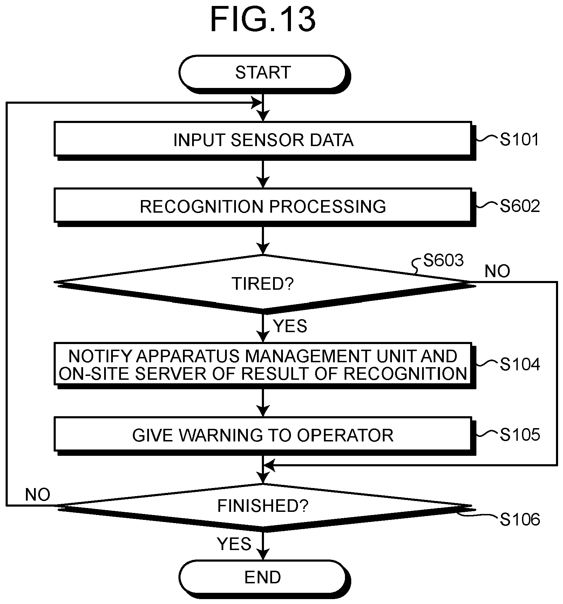

FIG. 13 is a flowchart illustrating an exemplary operation procedure in the information processing system 1 according to the present embodiment. As illustrated in FIG. 13, in the present embodiment, in the operation similar to the operation described with reference to FIG. 3 in the first embodiment, Steps S102 and S103 are replaced with Steps S602 and S603.

In Step S602, the recognition unit 111 performs recognition processing on the basis of the input sensor data to recognize the degree of the operator's fatigue.

In Step S603, as in Step S103 in FIG. 3, when it is recognized that the operator is not tired in the recognition processing in Step S202 (NO in Step S603), the present operation proceeds to Step S106, and when the it is recognized that the operator is tired (YES in Step S603), the result of the recognition is input to the apparatus management unit 120 and transmitted to the on-site server 300 via the predetermined network (Step S104).

### 7.3 Conclusion

As described above, according to the present embodiment, it is possible to recognize the degree of the operator's fatigue to give warning on the basis of one or more pieces of sensor data input from the sensor unit 101 or the like, thus, improving current or future safety of the site. Note that the other configurations, operations, and effects may be similar to those of the embodiments described above, and detailed description thereof will be omitted here.

### 8. Seventh Embodiment

Next, a seventh embodiment using the information processing system 1 described above will be described in detail below with reference to the drawings. In the seventh embodiment, a description is made of an example of the performance of various recognition processing (may include the semantic segmentation, etc.) by the recognition unit 111 in the embodiments described above. In the various recognition processing, information about the sensor unit 101 (hereinafter, also referred to as attribute information), such as a height, angle, or FoV (angle of view) of a camera is used as an additional input, in addition to the input of the sensing data such as the image data, depth image data, IMU data, or GNSS data. Note that in the following description, the same configurations, operations, and effects as those of the embodiments described above are cited, and the redundant description thereof will be omitted.

### 8.1 Exemplary processing procedure

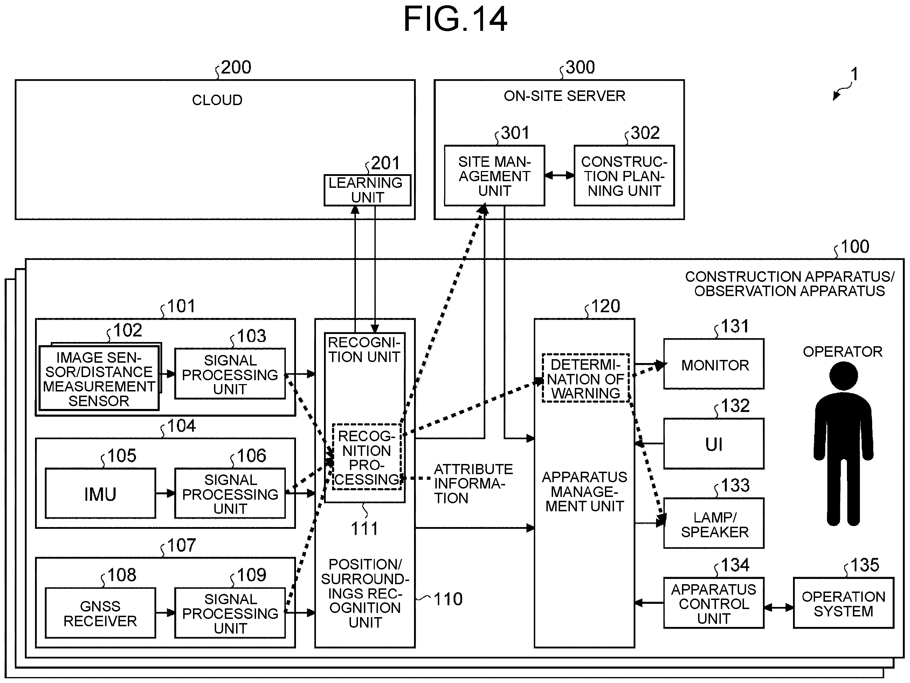

FIG. 14 is a diagram illustrating a process from recognition processing to warning to the operator in the information processing system 1 according to the present embodiment. As illustrated in FIG. 14, in a case where recognition additionally using the attribute information is applied to the information processing system 1, the recognition unit 111 of the position/surroundings recognition unit 110 performs recognition processing with the attribute information about the sensor unit 101 or the like, as an input, in addition to the input of the sensor data input from the sensor unit 101 or the like.

For example, the recognition unit 111 performs various recognition processing such as object recognition for a person, thing, or the like, and the semantic segmentation, by using, if the sensor unit 101 or the like is a camera, the attribute information such as a height of an installation position of the camera, or an attitude (angle) or FoV (angle of view) of the camera, as an additional input, in addition to the input of the sensor data such as the image data, depth image data, IMU data, or GNSS data, input from the sensor unit 101 or the like. As in the embodiments described above, a result of the recognition processing may be used for warning or the like for preventing contact between the apparatus 100 and a person or thing.

For example, in a case where the apparatus 100 is a heavy machine or the like such as a crane vehicle, a camera (one of the sensor unit 101 or the like) that images the surroundings of the apparatus 100 is installed at a higher position than a camera or the like mounted on an automobile or the like, facing downward. Therefore, a silhouette of a person or thing captured in image data acquired by the camera has a special shape different from a silhouette of a person or thing in image data acquired by the camera or the like mounted on the automobile or the like. Therefore, as in the present embodiment, the performance of the recognition processing by adding the attribute information about the height of the installation position of the sensor unit 101 or the like, or the attitude and the like of the sensor unit 101 or the like, to the input to the recognition unit 111 makes it possible to improve accuracy in recognition of the person or thing that is captured as the silhouette having the different special shape, appropriately giving warning to the operator. This configuration makes it possible to further improve the current or future safety of the site.

A learning model that is configured to add such attribute information can be trained by training or retraining with training data to which the attribute information is added. This configuration makes it possible to cause the recognition unit 111 to perform recognition processing with higher accuracy to which the attribute information about the sensor unit 101 or the like is added.

Note that, for the attribute information about the height of the installation position of the sensor unit 101 or the like, or the attitude and the like of the sensor unit 101 or the like, position/attitude information obtained from an IMU or GNSS receiver provided in the sensor unit 101 or the like or the apparatus 100 may be used. Therefore, even when the height of the grounding position of the sensor unit 101 or the like, the attitude or the like of the sensor unit 101 or the like dynamically changes, it is possible to cause the recognition unit 111 to perform appropriate recognition processing according to the change. However, the present invention is not limited thereto, and the attribute information about the sensor unit 101 or the like may have a static value. In addition, the dynamic value and the static value may be mixed so that part of the attribute information has the dynamic value and the rest has the static value.

### 8.2 Exemplary operation procedure

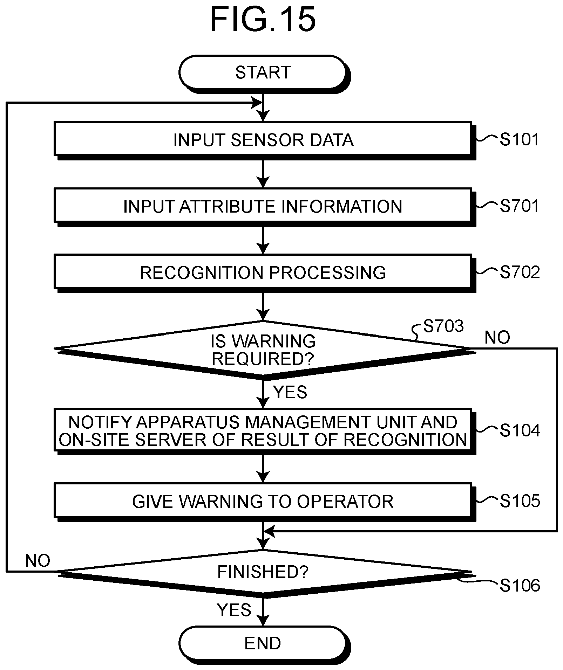

FIG. 15 is a flowchart illustrating an exemplary operation procedure in the information processing system 1 according to the present embodiment. As illustrated in FIG. 15, in the present embodiment, in the operation similar to the operation described with reference to FIG. 3 in the first embodiment, Step S701 is added after Step S101, and Steps S102 and S103 are replaced with Steps S702 and S703.

In Step S701, the attribute information about the sensor unit 101 or the like is input. However, the present invention is not limited thereto, and the attribute information about each of the sensor unit 101 or the like may be input accompanying the sensor data in Step S101.

In Step S702, the recognition unit 111 performs the recognition processing on the basis of the input sensor data and attribute information. For example, in a case where the present embodiment is applied to earthquake recognition according to the first embodiment, the recognition unit 111 performs the recognition processing on the basis of the input sensor data and attribute information to recognize whether the earthquake has occurred.

In Step S703, for example, on the basis of a result of the recognition processing in Step S702, it is determined whether warning to the operator is required. For example, in a case where the present embodiment is applied to the recognition of the earthquake according to the first embodiment, the recognition unit 111 determines the earthquake has occurred, that is, the warning is required (YES in Step S103 in FIG. 3). When it is determined that no warning is required (NO in Step S703), the present operation proceeds to Step S106, and when it is determined that the warning is required (YES in Step S703), the result of the recognition is input to the apparatus management unit 120 and transmitted to the on-site server 300 via the predetermined network (Step S104).

### 8.3 Conclusion

As described above, according to the present embodiment, the various recognition processing is performed on the basis of the attribute information about each of the sensor unit 101 or the like, in addition to one or more pieces of sensor data input from the sensor unit 101 or the like, thus, performing more accurate recognition. This configuration makes it possible to further improve the current or future safety of the site. Note that the other configurations, operations, and effects may be similar to those of the embodiments described above, and detailed description thereof will be omitted here.

### 9. Eighth Embodiment

Next, an eighth embodiment using the information processing system 1 described above will be described in detail below with reference to the drawings. In the eighth embodiment, a description is made of an example of the change of the intensity of warning (warning level) according to an object recognized by the recognition unit 111 or the type of the object in the embodiments described above. Note that in the following description, the same configurations, operations, and effects as those of the embodiments described above are cited, and the redundant description thereof will be omitted.

### 9.1 Exemplary processing procedure

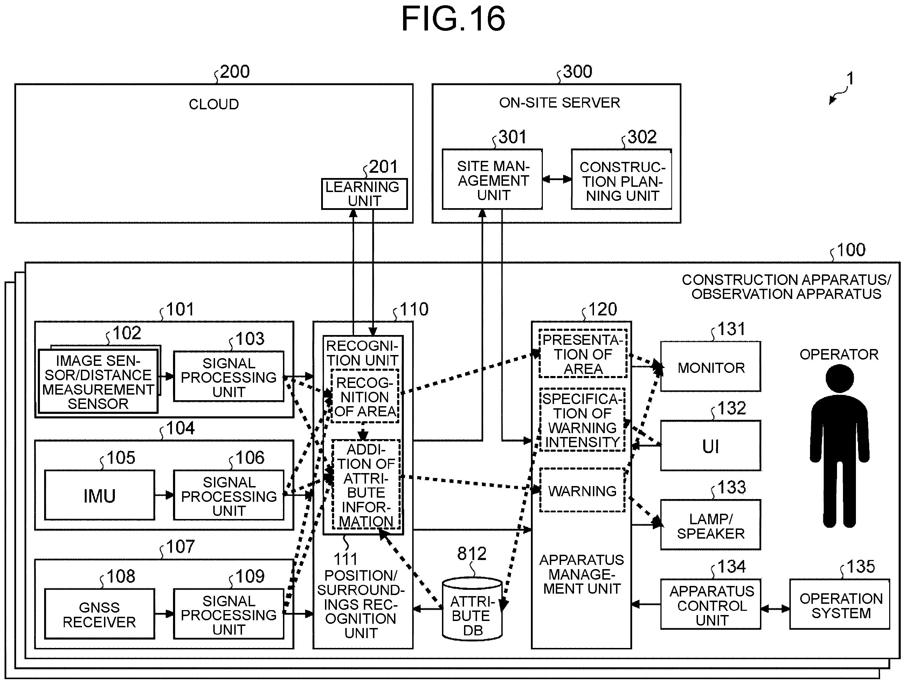

FIG. 16 is a diagram illustrating a process from recognition processing to warning to the operator in the information processing system 1 according to the present embodiment. As illustrated in FIG. 16, in a case where the warning level is changed according to the object or the type thereof in the information processing system 1, the recognition unit 111 of the position/surroundings recognition unit 110 gives warning to the operator at a warning level set for each object or each type thereof. In addition, each apparatus 100 is provided with an attribute database 812 for managing the warning level set for each object or each type thereof.

The recognition unit 111 uses image data, depth image data, IMU data, GNSS data, or the like input from the sensor unit 101 or the like as an input to perform area recognition processing of recognizing the presence or positions of a person and thing being around the apparatus 100 or recognizing an area where the person and thing are positioned by semantic segmentation or the like.

The apparatus management unit 120 presents (area presentation), as auxiliary information of the operation of the apparatus 100, the presence of the object and a result of the semantic segmentation (the area or the position where the object is positioned), to the operator via the monitor 131, on the basis of a result of the area recognition processing by the recognition unit 111. Meanwhile, the operator inputs selection of an area where an object for which the warning level is to be set is positioned, from the presented areas of the objects and the like, for example, by using the UI 132 or the like. Note that examples of the object may be similar to, for example, the examples described in the fifth embodiment.

When the selection of the area being a target to which the warning level is to be set is input from the operator, the apparatus management unit 120 sets "the view and the position of the object and specified warning intensity" (hereinafter, also referred to as warning level information), for the selected area, an object corresponding to the area, or a type to which the object belongs, and registers the warning level information set for each object or type thereof, in the attribute database 812. Note that "the view" and "the position" in the warning level information may be similar to those in the object information according to the fifth embodiment.

In this way, when the warning level information is registered in the attribute database 812, the recognition unit 111 performs various recognition processing on the sensor data input from the sensor unit 101 or the like. Note that the recognition processing performed by the recognition unit 111 may be any of the recognition processing exemplified in the embodiments described above. Furthermore, the recognition unit 111 may include an object for which the warning level information is not set, as a recognition target.

In the recognition processing, the recognition unit 111 recognizes an object or area about which warning is required, for example, with the sensor data such as the image data, depth image data, IMU data, or GNSS data input from the sensor unit 101 or the like, as an input.

Subsequently, for the object or area about which warning is recognized to be required, the recognition unit 111 performs attribute information adding processing of adding the warning level information set to the object or type thereof in the attribute database 812. For example, the recognition unit 111 compares the object obtained as the result of the recognition or the type of the object with the objects or types thereof for which the warning level information is registered in the attribute database 812, and adds a corresponding warning level information to an object located at the same position and having the same view or the type of the object. At that time, the warning may be given at a low warning level (at the level of attention) to objects having the same view but located at different positions. Then, the recognition unit 111 notifies the apparatus management unit 120 of the information about the object or area to which the warning level information is assigned, as the result of the recognition. Note that the area recognition processing and the attribute information adding processing may be performed by one recognition unit 111, or may be performed by different recognition units 111 included in the position/surroundings recognition unit 110.

Meanwhile, the apparatus management unit 120 gives warning according to the warning level given to the object or area about which warning is determined to be required in the result of the recognition, to the operator via the monitor 131 or the output unit 133. This configuration makes it possible to give warning about the object selected as the target by the operator or the objects having the same view but located at different positions, at a warning level set by the operator.

Note that the warning level information registered in the attribute database 812 of a certain apparatus 100 may be collected to the on-site server 300 to be shared with another apparatus 100 on the same site, an apparatus 100 on another site, and the like. This configuration makes it possible to set the warning level for each object or type thereof between two or more apparatuses 100, making the setting of the warning level more efficient. At that time, when the warning is given on the basis of the warning level information set by the other apparatus 100, the operator may be notified of the warning level that has been already set, in addition to the warning according to the warning level. In addition, the collection of the warning level information by the on-site server 300 and the sharing of the warning level information between the apparatuses 100 (downloading to the respective apparatuses 100) may be automatically performed by the apparatus 100 or the on-site server 300, or may be manually performed by the operator.

Furthermore, the warning level information registered in the attribute database 812 may be uploaded to the cloud 200, for analyzation, and used for training or retraining of a learning model. This configuration makes it possible to improve the recognition performance of the recognition unit 111. For training or retraining of the recognition unit 111, for example, a method using simulation, the method using simulation, the method using abnormality detection, or the like may be used, as in the embodiments described above.

### 9.2 Exemplary operation procedure

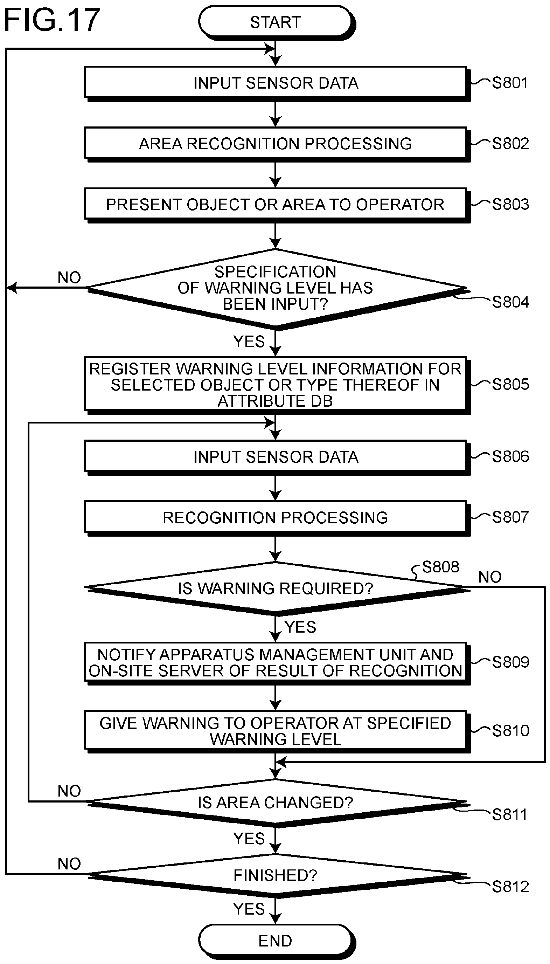

FIG. 17 is a flowchart illustrating an exemplary operation procedure in the information processing system 1 according to the present embodiment. As illustrated in FIG. 17, in the present embodiment, an area as a monitoring target is selected first, in the information processing system 1, as in the fifth embodiment. Specifically, for example, as in Step S101 in FIG. 3 the sensor data acquired by the sensor unit 101 or the like is input first to the recognition unit 111 of the position/surroundings recognition unit 110 (Step S801).

Next, the recognition unit 111 performs the area recognition processing on the basis of the input sensor data (Step S802). In the area recognition processing, as described above, for example, the area where the object is positioned is labeled by the semantic segmentation or the like, and the area of the object is identified. The recognized object and area are notified to the apparatus management unit 120.

Next, the apparatus management unit 120 presents the recognized object and area to the operator via the monitor 131 (Step S803). On the other hand, when the selection of the object or area and specification of the warning level for the selected object or area are input from the operator by using, for example, the UI 132 or the like (YES in Step S804), the apparatus management unit 120 registers the warning level information about the selected object or area, in the attribute database 812 (Step S805). Note that when the selection by the operator is not input (NO in Step S804), the present operation returns to Step S801.

Next, recognition processing for the object for which the warning level is specified or an object or area having the same type as the object for which the warning level is specified is performed. Specifically, for example, as in Step S101 in FIG. 3 the sensor data acquired by the sensor unit 101 or the like is input first to the recognition unit 111 of the position/surroundings recognition unit 110 (Step S806).

Next, the recognition unit 111 performs the recognition processing for the object or area as the target on the basis of the input sensor data (Step S807).

Next, the recognition unit 111 determines whether the warning about the object or area as the target to the operator is required, on the basis of a result of the recognition processing (Step S808). When it is determined that no warning is required (NO in Step S808), the present operation proceeds to Step S811. On the other hand, when it is determined that the warning is required (YES in Step S808), the recognition unit 111 notifies the apparatus management unit 120 of the result of the recognition (Step S809). Note that notification of the result of the recognition may be sent from the recognition unit 111 or the apparatus management unit 120 to the on-site server 300 and shared with the another apparatus 100.

Meanwhile, the apparatus management unit 120 gives warning at the specified warning level about the object or area about which warning is determined to be required to the operator, for example, via the monitor 131 or output unit 133 (Step S810).

Next, the apparatus management unit 120 determines whether to change the object or area as a warning target on the basis of, for example, an operation or the like input by the operator from the UI 132 or the like (Step S811). When the object or area as the warning target is not changed (NO in Step S811), the present operation returns to Step S806.

On the other hand, when the area as the warning target is changed (YES in Step S811), the control unit that controls the apparatus 100 determines whether to finish the present operation, and when it is determined to finish the present operation (YES in Step S812), the present operation is finished. On the other hand, when it is determined not to finish the present operation (NO in Step S812), the present operation returns to Step S801, and the subsequent processing is performed.

### 9.3 Conclusion

As described above, according to the present embodiment, the warning level is set for each object or type thereof on the basis of one or more pieces of sensor data input from the sensor unit 101 or the like and the warning is given to the operator at the set warning level. Therefore, the operator can know more accurately what kind of situation the object or the like to be protected has. This configuration makes it possible to improve the current or future safety of the site. Note that the other configurations, operations, and effects may be similar to those of the embodiments described above, and detailed description thereof will be omitted here.

### 10. Ninth Embodiment

Next, a ninth embodiment using the information processing system 1 described above will be described in detail below with reference to the drawings. In the eighth embodiment described above, the example of the change of the warning level for each object or type thereof has been described. On the other hand, in the ninth embodiment, a description is made of an example of exclusion of a specific object or an object of the same type as the specific object, from the warning target. Note that in the following description, the same configurations, operations, and effects as those of the embodiments described above are cited, and the redundant description thereof will be omitted.

### 10.1 Exemplary processing procedure

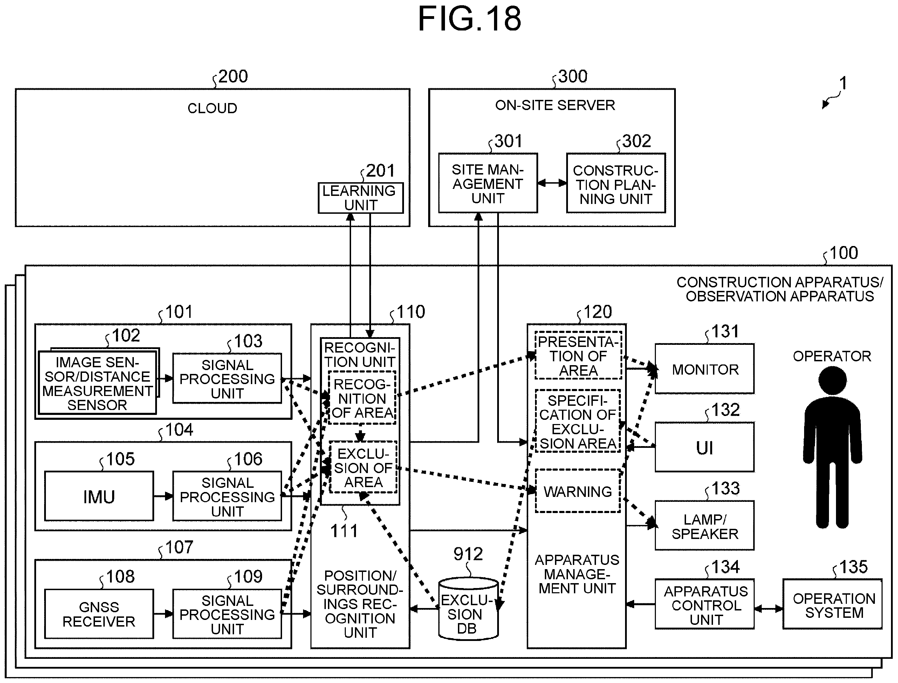

FIG. 18 is a diagram illustrating a process from recognition processing to warning to the operator in the information processing system 1 according to the present embodiment. As illustrated in FIG. 18, in a case where the specific object or the object of the same type as the specific object is excluded from the warning target in the information processing system 1, the recognition unit 111 of the position/surroundings recognition unit 110 performs area exclusion processing of determining necessity of warning about an object or area as the target, according to the object or type thereof specified as a result of the recognition. In addition, each apparatus 100 is provided with an exclusion database 912 for excluding each object or type thereof from the warning target.

The recognition unit 111 uses image data, depth image data, IMU data, GNSS data, or the like input from the sensor unit 101 or the like as an input to perform area recognition processing of recognizing the presence or positions of a person and thing being around the apparatus 100 or recognizing an area where the person and thing are positioned by semantic segmentation or the like.

The apparatus management unit 120 presents (area presentation), as auxiliary information of the operation of the apparatus 100, the presence of the object and a result of the semantic segmentation (the area or the position where the object is positioned), to the operator via the monitor 131, on the basis of a result of the area recognition processing by the recognition unit 111. Meanwhile, the operator inputs selection of the area where an object to be excluded from the warning target is positioned, from the presented areas of the objects and the like, for example, by using the UI 132 or the like. Note that examples of the object may be similar to, for example, the examples described in the fifth embodiment.

When the selection of the area to be excluded from the warning target is input from the operator, the apparatus management unit 120 sets "the view and the position of the object" (hereinafter, also referred to as exclusion information), for the selected area, an object corresponding to the area, or a type to which the object belongs, and registers the exclusion information set for each object or type thereof, in the exclusion database 912. Note that "the view" and "the position" in the exclusion information may be similar to those in the object information according to the fifth embodiment.

In this way, when the exclusion information is registered in the exclusion database 912, the recognition unit 111 performs various recognition processing on the sensor data input from the sensor unit 101 or the like. Note that the recognition processing performed by the recognition unit 111 may be any of the recognition processing exemplified in the embodiments described above. Furthermore, the recognition unit 111 may include an object to be excluded from the warning target, as a recognition target.

In the recognition processing, the recognition unit 111 recognizes an object or area about which warning is required, for example, with the sensor data such as the image data, depth image data, IMU data, or GNSS data input from the sensor unit 101 or the like, as an input.

Subsequently, the recognition unit 111 performs the area exclusion process for determining whether the exclusion information is registered in the exclusion database 912, for the object or area recognized in the area recognition processing. For example, the recognition unit 111 compares the object obtained as the result of the recognition or the type of the object with the objects or types thereof registered to be excluded from the warning target in the exclusion database 912, and excludes an object located at the same position and having the same view or the type of the object, from the warning target. However, the present invention is not limited thereto, and the warning may be given at a low warning level (at the level of attention) to objects having the same view but located at different positions. Then, the recognition unit 111 notifies the apparatus management unit 120 of information about the object or area not excluded from the warning target in the exclusion database 912, as the result of the recognition. Note that the area recognition processing and the area exclusion processing may be performed by one recognition unit 111, or may be performed by different recognition units 111 included in the position/surroundings recognition unit 110.

Meanwhile, the apparatus management unit 120 gives warning about the object or area as the warning target, to the operator via the monitor 131 or the output unit 133, on the basis of the result of the recognition notified of by the recognition unit 111. Therefore, only warning about a notable object or area to which attention is to be paid is given to the operator, making it possible to give a more accurate warning to the operator.

Note that the exclusion information registered in the exclusion database 912 of a certain apparatus 100 may be collected by the on-site server 300 to be shared with another apparatus 100 on the same site, an apparatus 100 on another site, and the like. This configuration makes it possible to set the object or type thereof as the exclusion target between two or more apparatuses 100, making the exclusion more efficient. At that time, when an object or area is excluded on the basis of the exclusion information set by the other apparatus 100, the operator may be notified of the object or area excluded from the target, in addition to the warning about the object or area that is the target. In addition, the collection of the exclusion information by the on-site server 300 and the sharing of the exclusion information between the apparatuses 100 (downloading to the respective apparatuses 100) may be automatically performed by the apparatus 100 or the on-site server 300, or may be manually performed by the operator.

Furthermore, the exclusion information registered in the exclusion database 912 may be uploaded to the cloud 200, for analyzation, and used for training or retraining of a learning model. This configuration makes it possible to improve the recognition performance of the recognition unit 111. For training or retraining of the recognition unit 111, for example, a method using simulation, the method using simulation, the method using abnormality detection, or the like may be used, as in the embodiments described above.

### 10.2 Exemplary operation procedure

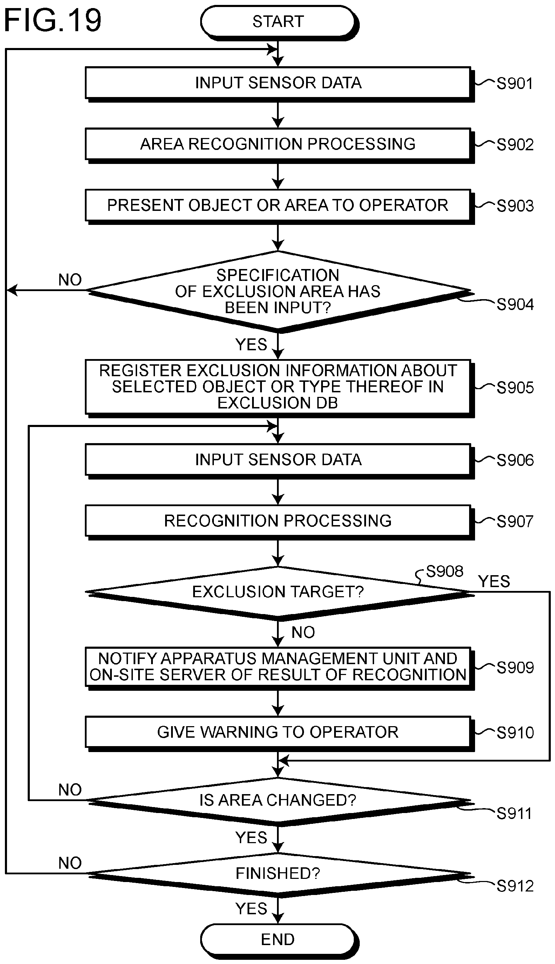

FIG. 19 is a flowchart illustrating an exemplary operation procedure in the information processing system 1 according to the present embodiment. As illustrated in FIG. 19, in the present embodiment, an area as a monitoring target is selected first, in the information processing system 1, as in the fifth embodiment. Specifically, for example, as in Step S101 in FIG. 3 the sensor data acquired by the sensor unit 101 or the like is input first to the recognition unit 111 of the position/surroundings recognition unit 110 (Step S901).

Next, the recognition unit 111 performs the area recognition processing on the basis of the input sensor data (Step S902). In the area recognition processing, as described above, for example, the area where the object is positioned is labeled by the semantic segmentation or the like, and the area of the object is identified. The recognized object and area are notified to the apparatus management unit 120.

Next, the apparatus management unit 120 presents the recognized object and area to the user via the monitor 131 (Step S903). On the other hand, when selection of the object or area that is the exclusion target to be excluded from the warning is input from the operator by using, for example, the UI 132 or the like (YES in Step S904), the apparatus management unit 120 registers the exclusion information about the selected object or area in the exclusion database 912 (Step S905). Note that when the selection by the operator is not input (NO in Step S904), the present operation returns to Step S901.

Next, the various recognition processing according to the embodiments described above are performed. Specifically, for example, as in Step S101 in FIG. 3 the sensor data acquired by the sensor unit 101 or the like is input first to the recognition unit 111 of the position/surroundings recognition unit 110 (Step S906).

Next, the recognition unit 111 performs the recognition processing for the object or area on the basis of the input sensor data (Step S907).

Next, the recognition unit 111 determines whether the recognized object or area is excluded from the warning target, on the basis of a result of the recognition processing (Step S908). When the recognized object or area is excluded from the warning target (YES in Step S908), the present operation proceeds to Step S911. On the other hand, when the recognized object or area is the warning target (NO in Step S908), the recognition unit 111 notifies the apparatus management unit 120 of the result of the recognition (Step S909). Note that notification of the result of the recognition may be sent from the recognition unit 111 or the apparatus management unit 120 to the on-site server 300 and shared with the another apparatus 100.

Meanwhile, the apparatus management unit 120 gives warning about the object or area as the warning target to the operator, for example, via the monitor 131 or output unit 133 (Step S910).

Next, the apparatus management unit 120 determines whether to change the object or area as the exclusion target on the basis of, for example, an operation or the like input by the operator from the UI 132 or the like (Step S911). When the object or area as the exclusion target is not changed (NO in Step S911), the present operation returns to Step S906.

On the other hand, when the area as the exclusion target is changed (YES in Step S911), the control unit that controls the apparatus 100 determines whether to finish the present operation, and when it is determined to finish the present operation (YES in Step S912), the present operation is finished. On the other hand, when it is determined not to finish the present operation (NO in Step S912), the present operation returns to Step S901, and the subsequent processing is performed.

### 10.3 Conclusion

As described above, according to the present embodiment, it is possible to set the object or type thereof to be excluded from the warning target on the basis of one or more pieces of sensor data input from the sensor unit 101 or the like. Therefore, the operator can receive a more accurate warning about the target or the like to be protected. This configuration makes it possible to improve the current or future safety of the site. Note that the other configurations, operations, and effects may be similar to those of the embodiments described above, and detailed description thereof will be omitted here.

### 11. Tenth Embodiment

Next, a tenth embodiment using the information processing system 1 described above will be described in detail below with reference to the drawings. In the tenth embodiment, a description is made of an example in which in a case where an object recognized by the recognition unit 111 or an object of the same type as the object is a dangerous object or a dangerous area, approach thereof is detected and the operator is notified thereof. Note that in the following description, the same configurations, operations, and effects as those of the embodiments described above are cited, and the redundant description thereof will be omitted.

### 11.1 Exemplary processing procedure

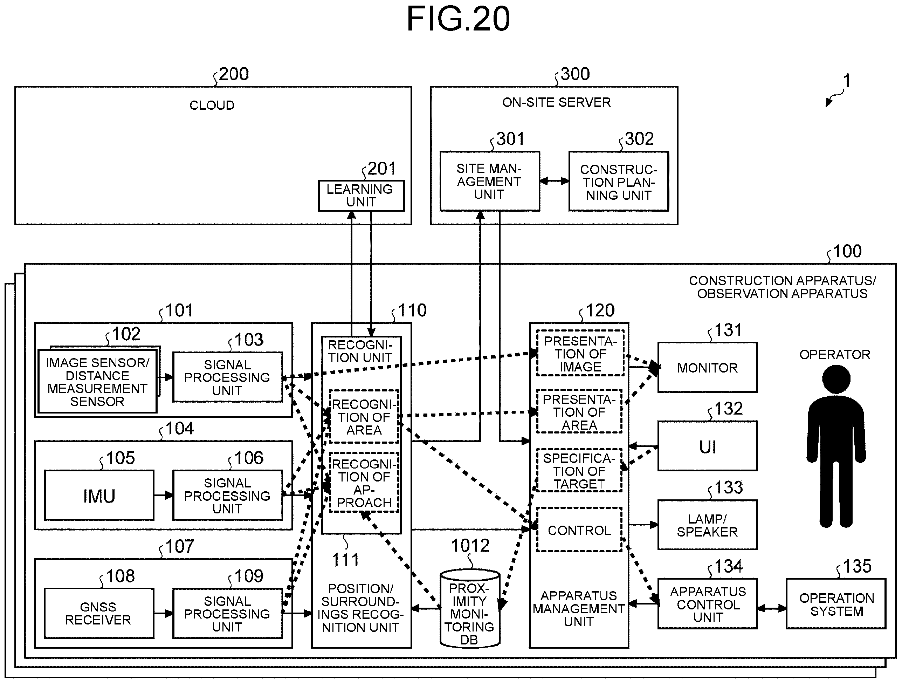

FIG. 20 is a diagram illustrating a process from recognition processing to warning to the operator in the information processing system 1 according to the present embodiment. As illustrated in FIG. 20, in a case where the operator is notified of the approach of a specific object or an object of the same type as the specific object in the information processing system 1, the recognition unit 111 of the position/surroundings recognition unit 110 performs recognition processing of recognizing the approach of an object or area that is specified as a dangerous object or a dangerous area by the operator, that is, an object or area as an approach monitoring target, from objects identified in a result of the recognition or objects of the same types of the objects. In addition, each apparatus 100 is provided with a proximity monitoring database 1012 for registering the object being the monitoring target against approach to the apparatus 100 or the type thereof.

The recognition unit 111 uses image data, depth image data, IMU data, GNSS data, or the like input from the sensor unit 101 or the like as an input to perform area recognition processing of recognizing the presence or positions of a person and thing being around the apparatus 100 or recognizing an area where the person and thing are positioned by semantic segmentation or the like.

The apparatus management unit 120 presents (area presentation), as auxiliary information of the operation of the apparatus 100, the presence of the object and a result of the semantic segmentation (the area or the position where the object is positioned), to the operator via the monitor 131, on the basis of a result of the area recognition processing by the recognition unit 111, in addition to an image around the apparatus 100 (hereinafter, also referred to as a surroundings image) acquired by the sensor unit 101 or the like. Meanwhile, the operator inputs selection of the area where the object as the approach monitoring target, from areas of objects and the like presented together with the surroundings image, by using, for example, the UI 132 or the like. Note that examples of the object may be similar to, for example, the examples described in the fifth embodiment.

When the selection of the area as the monitoring target for approach is input from the operator, the apparatus management unit 120 sets "the view and the position" (hereinafter, also referred to as proximity monitoring information), for the selected area, an object corresponding to the area, or a type to which the object belongs, and registers the proximity monitoring information set for each object or type thereof, in the proximity monitoring database 1012. Note that "the view" and "the position" in the proximity monitoring information may be similar to those in the object information according to the fifth embodiment.

In this way, when the proximity monitoring information is registered in the proximity monitoring database 1012, the recognition unit 111 performs various recognition processing on the sensor data input from the sensor unit 101 or the like.

In the recognition processing, the recognition unit 111 recognizes approach of an object or area to the apparatus 100 (or approach of the apparatus 100 to the object of area), with the sensor data such as the image data, depth image data, IMU data, or GNSS data input from the sensor unit 101 or the like, as an input.

Subsequently, the recognition unit 111 performs proximity recognition processing for determining whether the object or area for which the proximity monitoring information is registered in the proximity monitoring database 1012 has approached the apparatus 100. For example, the recognition unit 111 compares the object obtained as the result of the recognition or the type of the object with the objects or types thereof registered as the warning target in the proximity monitoring database 1012, sets an object located at the same position and having the same view or the type of the object as the monitoring target, and recognizes whether a distance between the object or type thereof and the apparatus 100 is within a predetermined distance. At that time, the distance used to determine the necessity of notification may be changed according to the object or type thereof. Then, when the object or area as the monitoring target is smaller than the predetermined distance, the recognition unit 111 notifies the apparatus management unit 120 of the result of the recognition of the object or area. Note that the area recognition processing and the proximity recognition processing may be performed by one recognition unit 111, or may be performed by different recognition units 111 included in the position/surroundings recognition unit 110.

Meanwhile, the apparatus management unit 120 notifies the operator of the approach of the object or area as the approach monitoring target, via the monitor 131 or the output unit 133, on the basis of the result of the recognition notified by the recognition unit 111. This configuration makes it possible that the operator accurately knows that the apparatus 100 has approached the dangerous object or dangerous area.

Note that the proximity monitoring information registered in the proximity monitoring database 1012 of a certain apparatus 100 may be collected by the on-site server 300 to be shared with another apparatus 100 on the same site, an apparatus 100 on another site, and the like. This configuration makes it possible to set the object or type thereof as the monitoring target between two or more apparatuses 100, making the registration of the monitoring target more efficient. At that time, when the approach of the object or the area is monitored on the basis of the proximity monitoring information set by the another apparatus 100, the operator may be notified of the object or area as the monitoring target, in addition to the notification about the object or area that is the target. In addition, the collection of the proximity monitoring information by the on-site server 300 and the sharing of the proximity monitoring information between the apparatuses 100 (downloading to the respective apparatuses 100) may be automatically performed by the apparatus 100 or the on-site server 300, or may be manually performed by the operator.

In addition, the proximity monitoring information registered in the proximity monitoring database 1012 may be uploaded to the cloud 200, for analyzation, and used for training or retraining of a learning model. This configuration makes it possible to improve the recognition performance of the recognition unit 111. For training or retraining of the recognition unit 111, for example, a method using simulation, the method using simulation, the method using abnormality detection, or the like may be used, as in the embodiments described above.

### 11.2 Exemplary operation procedure

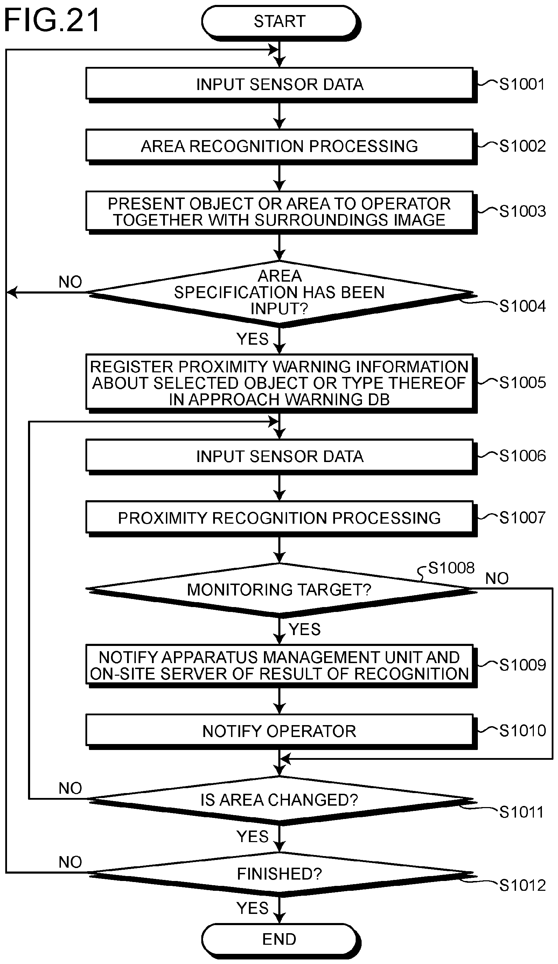

FIG. 21 is a flowchart illustrating an exemplary operation procedure in the information processing system 1 according to the present embodiment. As illustrated in FIG. 21, in the present embodiment, an area as a monitoring target is selected first, in the information processing system 1, as in the fifth embodiment. Specifically, for example, as in Step S101 in FIG. 3 the sensor data acquired by the sensor unit 101 or the like is input first to the recognition unit 111 of the position/surroundings recognition unit 110 (Step S1001).

Next, the recognition unit 111 performs the area recognition processing on the basis of the input sensor data (Step S1002). In the area recognition processing, as described above, for example, the area where the object is positioned is labeled by the semantic segmentation or the like, and the area of the object is identified. The recognized object and area are notified to the apparatus management unit 120.

Next, the apparatus management unit 120 presents the recognized object or area to the operator via the monitor 131, together with the surroundings image input from the sensor unit 101 or the like (Step S1003). On the other hand, when selection of the object or area as the monitoring target for warning is input from the operator by using, for example, the UI 132 or the like (YES in Step S1004), the apparatus management unit 120 registers the proximity monitoring information about the selected object or area in the proximity monitoring database 1012 (Step S1005). Note that when the selection by the operator is not input (NO in Step S1004), the present operation returns to Step S1001.

Next, the proximity recognition processing for the object or area as the monitoring target is performed. Specifically, for example, as in Step S101 in FIG. 3 the sensor data acquired by the sensor unit 101 or the like is input first to the recognition unit 111 of the position/surroundings recognition unit 110 (Step S1006).

Next, the recognition unit 111 performs the proximity recognition processing for recognizing whether the object or area has approached the apparatus 100 on the basis of the input sensor data (Step S1007).

Next, the recognition unit 111 determines whether the object or area having approached the apparatus 100 is set as the monitoring target, on the basis of a result of the recognition processing (Step S1008). When the object or area is not set as the monitoring target (NO in Step S1008), the present operation proceeds to Step S1011. On the other hand, when the object or area is set as the monitoring target (YES in Step S1008), the recognition unit 111 notifies the apparatus management unit 120 of the result of the recognition (Step S1009). Note that notification of the result of the recognition may be sent from the recognition unit 111 or the apparatus management unit 120 to the on-site server 300 and shared with the another apparatus 100.

Meanwhile, the apparatus management unit 120 notifies the operator of the approach of the object or area as the monitoring target to the apparatus 100, for example, via the monitor 131 or output unit 133 (Step S1010).

Next, the apparatus management unit 120 determines whether to change the object or area as the monitoring target on the basis of, for example, an operation or the like input by the operator from the UI 132 or the like (Step S1011). When the object or area as the monitoring target is not changed (NO in Step S1011), the present operation returns to Step S1006.

On the other hand, when the area as the monitoring target is changed (YES in Step S1011), the control unit that controls the apparatus 100 determines whether to finish the present operation, and when it is determined to finish the present operation (YES in Step S1012), the present operation is finished. On the other hand, when it is determined not to finish the present operation (NO in Step S1012), the present operation returns to Step S1001, and the subsequent processing is performed.

### 11.3 Conclusion

As described above, according to the present embodiment, it is possible to notify the operator of the approach of the dangerous object or the dangerous area specified by the operator to the apparatus 100, on the basis of one or more pieces of sensor data input from the sensor unit 101 or the like. Therefore, the operator can more accurately ensure the safety of the apparatus 100 and the operator him-/herself. This configuration makes it possible to improve the current or future safety of the site. Note that the other configurations, operations, and effects may be similar to those of the embodiments described above, and detailed description thereof will be omitted here.

### 12. Eleventh Embodiment

Next, an eleventh embodiment using the information processing system 1 described above will be described in detail below with reference to the drawings. Note that in the following description, the same configurations, operations, and effects as those of the embodiments described above are cited, and the redundant description thereof will be omitted.

As in the embodiments described above, the sensor data acquired by the sensor unit 101 or the like or the result of the recognition thereof may be uploaded to the cloud 200 or the like, analyzed/corrected, and used for training or retraining of the learning model. At that time, in addition to the information about the object or area specified by the operator, such as the object information, the attribute information, the exclusion information, and proximity warning information that have been exemplified in the embodiments described above, information (hereinafter, also referred to as extraction information) about an area (i.e., an area surrounded by a bounding box) that is recognized as a person or a thing other than the person, identified by the recognition unit 111, or information about an area (also referred to as free space) that is recognized as the person or the thing by using the semantic segmentation is uploaded to the cloud 200 or the like, and thus, it is possible to more efficiently/effectively training or retraining the learning model.

Therefore, in the eleventh embodiment, a description is made of the extraction information effective for training or retraining of the learning model that is extracted from the sensor data acquired by the sensor unit 101 or the like, uploaded to the cloud 200, and used for training or retraining of the learning model, in the embodiments described above.

### 12.1 Exemplary processing procedure

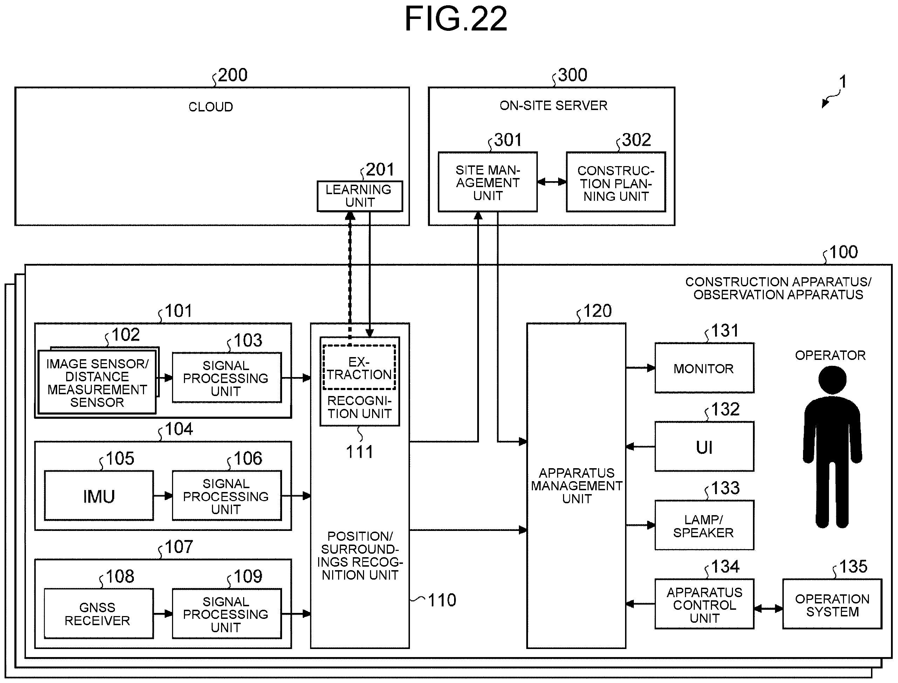

FIG. 22 is a diagram illustrating a process from recognition processing to warning to the operator in the information processing system 1 according to the present embodiment. As illustrated in FIG. 22, in a case where the sensor data acquired by the sensor unit 101 or the like is used for training or retraining of the learning model, in the information processing system 1, the recognition unit 111 of the position/surroundings recognition unit 110 performs extraction processing of extracting the extraction information used for training or retraining of the learning model from the sensor data. For example, in a case where the sensor data is the image data, depth image data, or the like, the recognition unit 111 extracts an area surrounded by the bounding box or a free space labeled by the semantic segmentation (hereinafter, collectively referred to as region of interest) from the sensor data, and uploads the extracted region of interest to the learning unit 201 of the cloud 200. At that time, various information associated with the region of interest, such as the object information, attribute information, exclusion information, and proximity warning information, are also uploaded to the learning unit 201, thus, further improving the performance or functionality of the learning model.

In addition, the sensor data acquired by the sensor unit 101 or the like is not directly uploaded to the cloud 200, but the extraction information extracted from the sensor data is uploaded to the cloud 200, thus, reducing the amount of information to be uploaded. However, both of the sensor data acquired by the sensor unit 101 or the like and the extraction information extracted from the sensor data may be uploaded to the cloud 200.

### 12.2 Exemplary operation procedure

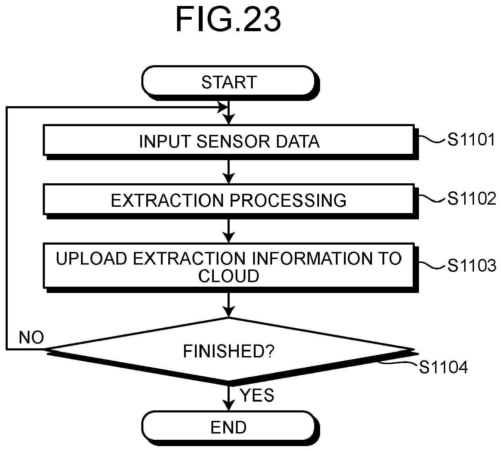

FIG. 23 is a flowchart illustrating an exemplary operation procedure in the information processing system 1 according to the present embodiment. As illustrated in FIG. 23, in the present embodiment, first, the sensor data acquired by the sensor unit 101 or the like is input to the recognition unit 111 of the position/surroundings recognition unit 110 (Step S1101).

Next, the recognition unit 111 performs the extraction processing on the input sensor data (Step S1102). In the extraction processing, for example, the area surrounded by the bounding box or the free space labeled by using the semantic segmentation is extracted.

Next, the apparatus management unit 120 uploads the extracted extraction information to the cloud 200 (Step S1103). Meanwhile, the learning unit 201 of the cloud 200 uses the uploaded extraction information to train or retrain the learning model. Note that, as described above, the information uploaded from the recognition unit 111 to the cloud 200 may include various information, such as the sensor data itself, result of the recognition, object information, attribute information, exclusion information, or proximity warning information.

Then, the control unit that controls the apparatus 100 determines whether to finish the present operation (Step S1104), and when it is determined to finish the present operation (YES in Step S1104), the present operation is finished. On the other hand, when it is determined not to finish the present operation (NO in Step S1104), the present operation returns to Step S1101, and the subsequent processing is performed.

### 12.3 Conclusion

As described above, according to the present embodiment, the extraction information extracted from the sensor data is used to train or retrain the learning model, thus, efficiently/effectively training and retraining the learning model. Then, the learning model that has been efficiently/effectively trained/retrained is used to constitute the recognition unit 111, thus, improving current or future safety of the site. Note that the other configurations, operations, and effects may be similar to those of the embodiments described above, and detailed description thereof will be omitted here.

### 13. Hardware configuration

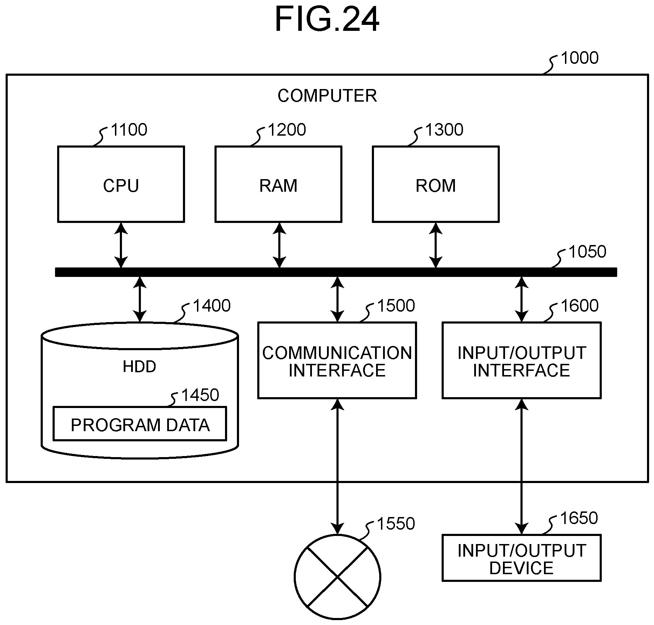

The position/surroundings recognition unit 110, the apparatus management unit 120, the learning unit 201, the on-site server 300, and the like according to the embodiments described above can be implemented by a computer 1000 having a configuration, for example, as illustrated in FIG. 24. FIG. 24 is a hardware configuration diagram illustrating an example of the computer 1000 implementing the functions of the position/surroundings recognition unit 110, the apparatus management unit 120, the learning unit 201, the on-site server 300, and the like. The computer 1000 includes a CPU 1100, a RAM 1200, a read only memory (ROM) 1300, a hard disk drive (HDD) 1400, a communication interface 1500, and an input/output interface 1600. The respective units of the computer 1000 are connected by a bus 1050.

The CPU 1100 is operated on the basis of programs stored in the ROM 1300 or the HDD 1400 and controls the respective units. For example, the CPU 1100 deploys a program stored in the ROM 1300 or the HDD 1400 to the RAM 1200, and performs processing corresponding to each of various programs.

The ROM 1300 stores a boot program such as a basic input output system (BIOS) executed by the CPU 1100 when the computer 1000 is booted, a program depending on the hardware of the computer 1000, and the like.

The HDD 1400 is a computer-readable recording medium that non-transitorily records the programs performed by the CPU 1100, data used by the programs, and the like. Specifically, the HDD 1400 is a recording medium that records a program for performing each operation according to the present disclosure that is an example of program data 1450.

The communication interface 1500 is an interface for connecting the computer 1000 to an external network 1550 (e.g., the Internet). For example, the CPU 1100 receives data from another apparatus or transmits data generated by the CPU 1100 to another apparatus, via the communication interface 1500.

The input/output interface 1600 is configured to include the I/F unit 18 described above, and is an interface that connects between an input/output device 1650 and the computer 1000. For example, the CPU 1100 receives data from an input device such as a keyboard or mouse, via the input/output interface 1600. In addition, the CPU 1100 transmits data to an output device such as a display, speaker, or printer, via the input/output interface 1600. Furthermore, the input/output interface 1600 may function as a media interface for reading a program or the like recorded on a predetermined recording medium. The medium includes, for example, an optical recording medium such as a digital versatile disc (DVD) or phase change rewritable disk (PD), a magneto-optical recording medium such as a magneto-optical disk (MO), a tape medium, a magnetic recording medium, a semiconductor memory, or the like.

For example, when the computer 1000 functions as the position/surroundings recognition unit 110, the apparatus management unit 120, the learning unit 201, the on-site server 300, or the like according to the embodiments described above, the CPU 1100 of the computer 1000 performs a program loaded on the RAM 1200 to implement the function of the position/surroundings recognition unit 110, the apparatus management unit 120, the learning unit 201, the on-site server 300, or the like. Furthermore, the HDD 1400 stores the programs according to the present disclosure. Note that the CPU 1100 executes the program data 1450 read from the HDD 1400, but in another example, the CPU 1100 may acquire the programs from another device via the external network 1550.

The embodiments of the present disclosure have been described above, but the technical scope of the present disclosure is not limited to the embodiments described above, and various modifications and alterations can be made without departing from the spirit and scope of the present disclosure. Moreover, the component elements of different embodiments and modifications may be suitably combined with each other.

Furthermore, the effects in the embodiments described herein are merely examples, the present invention is not limited to these effects, and other effects may also be provided.

Note that the present technology can also have the following configurations.
(1) An information processing system for ensuring safety of a site where a heavy machine is introduced, the information processing system including:
   one or more sensor units that are mounted on an apparatus arranged at the site to detect a situation at the site;
   a recognition unit that recognizes the situation at the site based on sensor data acquired by the one or more sensor units; and
   an apparatus management unit that manages the apparatus based on a result of recognition by the recognition unit.
(2) The information processing system according to (1), wherein
   the recognition unit includes a learning model using a neural network.
(3) The information processing system according to (1) or (2), wherein
   the one or more sensor units include at least one of an image sensor, a distance measurement sensor, an event-based vision sensor (EVS), an inertial sensor, a position sensor, a sound sensor, an atmospheric pressure sensor, a water pressure sensor, an illuminance sensor, a temperature sensor, a humidity sensor, an infrared sensor, and a wind sensor.
(4) The information processing system according to any one of (1) to (3), wherein
   the apparatus management unit performs control to notify an operator of the apparatus of the result of recognition or gives warning to the operator based on the result of recognition.
(5) The information processing system according to any one of (1) to (4), wherein
   the recognition unit recognizes an earthquake based on the sensor data.
(6) The information processing system according to any one of (1) to (4), wherein
   the recognition unit recognizes an accident based on the sensor data.
(7) The information processing system according to any one of (1) to (4), wherein
   the recognition unit recognizes a situation leading to an accident based on the sensor data.
(8) The information processing system according to any one of (1) to (4), wherein
   the recognition unit recognizes a possibility of occurrence of an accident based on the sensor data.
(9) The information processing system according to any one of (1) to (4), wherein
   the recognition unit recognizes or predicts movement of an object or area around the apparatus, based on the sensor data.
(10) The information processing system according to any one of (1) to (4), wherein
   the recognition unit recognizes fatigue of an operator who operates the apparatus, based on the sensor data.
(11) The information processing system according to (10), wherein
   the recognition unit recognizes the fatigue of the operator, based on an operating time of the apparatus, in addition to the sensor data.
(12) The information processing system according to any one of (1) to (11), wherein
   the recognition unit recognizes the situation at the site, based on attribute information about the one or more sensor units, in addition to the sensor data.
(13) The information processing system according to any one of (1) to (12), wherein
   the recognition unit performs first recognition processing of recognizing an object or area positioned around the apparatus, based on the sensor data, and second recognition processing of recognizing the situation of the site, based on the sensor data, and
   the apparatus management unit performs control to give warning at an intensity according to the object or area recognized in the first recognition processing, to an operator of the apparatus, based on a result of recognition obtained from the second recognition processing.
(14) The information processing system according to (13), further including
   a holding unit that holds an intensity of warning for each object or area, wherein
   the apparatus management unit causes the operator to set the intensity of warning about the object or area recognized by the first recognition processing,
   the holding unit holds the intensity of warning for each object or area set by the operator, and
   the apparatus management unit performs control to give warning according to the intensity of warning for each object or area held in the holding unit, to the operator of the apparatus, based on the result of recognition obtained from the second recognition processing.
(15) The information processing system according to any one of (1) to (12), further including
   a holding unit that holds exclusion information about whether to exclude each object or area from a warning target, wherein
   the recognition unit performs first recognition processing of recognizing an object or area positioned around the apparatus, based on the sensor data, and second recognition processing of recognizing the situation of the site, based on the sensor data, and
   when the object or area recognized in the first recognition processing is excluded from the warning target in the exclusion information held in the holding unit, the apparatus management unit does not perform control to give warning about the object or area.
(16) The information processing system according to any one of (1) to (12), wherein
   the recognition unit performs first recognition processing of recognizing an object or area positioned around the apparatus, based on the sensor data, and second recognition processing of recognizing approach of the object or area to the apparatus, based on the sensor data, and
   the apparatus management unit performs control to give warning to an operator of the apparatus, based on a result of recognition obtained from the second recognition processing, when the object or area recognized in the first recognition processing approaches the apparatus.
(17) The information processing system according to (2), further including
   a learning unit that trains or retrains the learning model, wherein
   the recognition unit performs extraction processing of extracting, from the sensor data, extraction information that is part of the sensor data, and transmits the extraction information extracted in the extraction processing to the learning unit, and
   the learning unit uses the extraction information received from the recognition unit to train or retrain the learning model.
(18) An information processing method for ensuring safety at a site where a heavy machine is introduced, the information processing method including:
   a recognition step of recognizing a situation at the site, based on sensor data acquired by one or more sensor units that are mounted on an apparatus arranged at the site to detect the situation at the site; and
   an apparatus step of managing the apparatus based on a result of recognition obtained in the recognition step.

### Reference Signs List

- 1: INFORMATION PROCESSING SYSTEM
- 100: APPARATUS
- 101, 104, 107: SENSOR UNIT
- 102: IMAGE SENSOR
- 103, 106, 109: SIGNAL PROCESSING UNIT
- 105: INERTIAL SENSOR
- 108: POSITION SENSOR
- 110: POSITION/SURROUNDINGS RECOGNITION UNIT
- 111: RECOGNITION UNIT
- 120: APPARATUS MANAGEMENT UNIT
- 131: MONITOR
- 132: USER INTERFACE
- 133: OUTPUT UNIT
- 134: APPARATUS CONTROL UNIT
- 135: OPERATION SYSTEM
- 512: OBJECT DATABASE
- 812: ATTRIBUTE DATABASE
- 912: EXCLUSION DATABASE
- 1012: PROXIMITY MONITORING DATABASE ition unit.

## Claims

1. An information processing system for ensuring safety of a site where a heavy machine is introduced, the information processing system including:
one or more sensor units that are mounted on an apparatus arranged at the site to detect a situation at the site;
a recognition unit that recognizes the situation at the site based on sensor data acquired by the one or more sensor units; and
an apparatus management unit that manages the apparatus based on a result of recognition by the recognition unit.

2. The information processing system according to claim 1, wherein
the recognition unit includes a learning model using a neural network.

3. The information processing system according to claim 1, wherein
the one or more sensor units include at least one of an image sensor, a distance measurement sensor, an event-based vision sensor (EVS), an inertial sensor, a position sensor, a sound sensor, an atmospheric pressure sensor, a water pressure sensor, an illuminance sensor, a temperature sensor, a humidity sensor, an infrared sensor, and a wind sensor.

4. The information processing system according to claim 1, wherein
the apparatus management unit performs control to notify an operator of the apparatus of the result of recognition or gives warning to the operator based on the result of recognition.

5. The information processing system according to claim 1, wherein
the recognition unit recognizes an earthquake based on the sensor data.

6. The information processing system according to claim 1, wherein
the recognition unit recognizes an accident based on the sensor data.

7. The information processing system according to claim 1, wherein
the recognition unit recognizes a situation leading to an accident based on the sensor data.

8. The information processing system according to claim 1, wherein
the recognition unit recognizes a possibility of occurrence of an accident based on the sensor data.

9. The information processing system according to claim 1, wherein
the recognition unit recognizes or predicts movement of an object or area around the apparatus, based on the sensor data.

10. The information processing system according to claim 1, wherein
the recognition unit recognizes fatigue of an operator who operates the apparatus, based on the sensor data.

11. The information processing system according to claim 10, wherein
the recognition unit recognizes the fatigue of the operator, based on an operating time of the apparatus, in addition to the sensor data.

12. The information processing system according to claim 1, wherein
the recognition unit recognizes the situation at the site, based on attribute information about the one or more sensor units, in addition to the sensor data.

13. The information processing system according to claim 1, wherein
the recognition unit performs first recognition processing of recognizing an object or area positioned around the apparatus, based on the sensor data, and second recognition processing of recognizing the situation of the site, based on the sensor data, and
the apparatus management unit performs control to give warning at an intensity according to the object or area recognized in the first recognition processing, to an operator of the apparatus, based on a result of recognition obtained from the second recognition processing.

14. The information processing system according to claim 13, further including
a holding unit that holds an intensity of warning for each object or area, wherein
the apparatus management unit causes the operator to set the intensity of warning about the object or area recognized by the first recognition processing,
the holding unit holds the intensity of warning for each object or area set by the operator, and
the apparatus management unit performs control to give warning according to the intensity of warning for each object or area held in the holding unit, to the operator of the apparatus, based on the result of recognition obtained from the second recognition processing.

15. The information processing system according to claim 1, further including
a holding unit that holds exclusion information about whether to exclude each object or area from a warning target, wherein
the recognition unit performs first recognition processing of recognizing an object or area positioned around the apparatus, based on the sensor data, and second recognition processing of recognizing the situation of the site, based on the sensor data, and
when the object or area recognized in the first recognition processing is excluded from the warning target in the exclusion information held in the holding unit, the apparatus management unit does not perform control to give warning about the object or area.

16. The information processing system according to claim 1, wherein
the recognition unit performs first recognition processing of recognizing an object or area positioned around the apparatus, based on the sensor data, and second recognition processing of recognizing approach of the object or area to the apparatus, based on the sensor data, and
the apparatus management unit performs control to give warning to an operator of the apparatus, based on a result of recognition obtained from the second recognition processing, when the object or area recognized in the first recognition processing approaches the apparatus.

17. The information processing system according to claim 2, further including
a learning unit that trains or retrains the learning model, wherein
the recognition unit performs extraction processing of extracting, from the sensor data, extraction information that is part of the sensor data, and transmits the extraction information extracted in the extraction processing to the learning unit, and
the learning unit uses the extraction information received from the recognition unit to train or retrain the learning model.

18. An information processing method for ensuring safety at a site where a heavy machine is introduced, the information processing method including:
a recognition step of recognizing a situation at the site, based on sensor data acquired by one or more sensor units that are mounted on an apparatus arranged at the site to detect the situation at the site; and
an apparatus step of managing the apparatus based on a result of recognition obtained in the recognition step.
